# EUROPEAN PATENT SPECIFICATION

(11) **EP 2 864 804 B1**
(45) Date of publication and mention of the grant of the patent: **15.11.2017**
(21) Application number: 13809963.5
(22) Date of filing: 25.06.2013
(51) Int. Cl.: G01S 19/39, G01S 19/50

(54) **METHODS AND DEVICES FOR IMPROVED POSITION DETERMINATION**
VERFAHREN UND VORRICHTUNGEN ZUR VERBESSERTEN POSITIONSBESTIMMUNG
PROCÉDÉS ET DISPOSITIFS DE DÉTERMINATION AMÉLIORÉE DE POSITION

(30) Priority: 26.06.2012 US 201261664183 P; 10.01.2013 US 201361750903 P
(43) Date of publication of application: 29.04.2015
(73) Proprietor: Ariel-University Research and Development Company Ltd., 4070000 Ariel (IL)
(72) Inventor: BEN MOSHE, Boaz, 46703 Herzlia (IL); LEVI, Harel, 62744 Tel-Aviv (IL); YOZEVITCH, Roy, 44841 Nofim (IL)
(74) Representative: Dr. Langfinger & Partner
(86) International application number: PCT/IB2013/055224
(87) International publication number: WO 2014/002018

(56) References cited:
- EP-A2- 1 006 367
- DE-A1- 10 044 393
- JP-A- 2009 192 257
- US-A1- 2008 129 598
- US-A1- 2010 079 332
- PAUL D. GROVES: "Shadow Matching: A New GNSS Positioning Technique for Urban Canyons", JOURNAL OF NAVIGATION., vol. 64, no. 03, 7 June 2011 (2011-06-07), pages 417-430, XP055271812, GB ISSN: 0373-4633, DOI: 10.1017/S0373463311000087
- VAN BREE R J P ET AL: "Lane Identification with Real Time Single Frequency Precise Point Positioning: A Kinematic Trial", GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 September 2011 (2011-09-23), page 314, XP056000780,
- STEINGASS A ET AL: "A Location and Movement Dependent GNSS Multipath Error Model for Pedestrian Applications", GNSS 2009 - PROCEEDINGS OF THE 22ND INTERNATIONAL TECHNICAL MEETING OF THE SATELLITE DIVISION OF THE INSTITUTE OF NAVIGATION (ION GNSS 2009), THE INSTITUTE OF NAVIGATION, 8551 RIXLEW LANE SUITE 360 MANASSAS, VA 20109, USA, 25 September 2009 (2009-09-25), pages 2284-2296, XP056010681,

## Description

### RELATED APPLICATION

The present application is related to PCT/IB2011/055899 having an International Filing Date of 22 December 2011 published on 28 June 2012 as WO2012/085876 of the Applicant that gains priority from US Provisional Patent Application 61/426,541 filed 23 December 2010.

### FIELD AND BACKGROUND OF THE INVENTION

The invention, in some embodiments, relates to the field of global navigation satellite systems, and more particularly to methods and devices for improving a position determined using a receiver of a global navigation satellite systems.

The invention, in some embodiments, relates to the field of vehicle navigation, and more particularly to methods and devices for improving position determination and lane detection of a vehicle using global navigation satellite systems. Detection of the specific lane in which a vehicle is driving in real-time may be useful for various applications such as autonomous driving, Automated Vehicle Location (AVL) systems, and safety awareness and navigation software. Additionally, GNSS systems may require accurate lane detection in order to provide sufficiently accurate driving instructions.

Global Navigation Satellite Systems (GNSS) typically allow suitable GNSS receivers to autonomously determine an own location (longitude, latitude, and altitude) on the globe using ephemeris data and time signals transmitted from one or more GNSS satellites.

A GNSS receiver receives signals from multiple GNSS satellites that include the precise coordinates of the satellites contained in the ephemeris data and the time stamps received from each satellite, and calculates a pseudorange from each satellite, corresponding to the distance from the receiver is expected be from the satellite. Using at least four pseudoranges and the location of the respective satellites, a GNSS receiver determines an own location by trilateration. The location is generally provided to a user as a presumed location area, for example a position circle having a center point and a radius which magnitude is related to an estimated error.

Disregarding topography and terrestrial objects on the Earth's surface, most global navigation satellite systems, such as GPS (US), GLONASS (Russia) and Galileo (European Union), have satellite coverage that ensures that a receiver on Earth has simultaneous lines of sight (LOS) to at least four satellites, resulting in typical positioning accuracy of 3-5 meters.

When the line of sight to a number of satellites is blocked (for example, by buildings found in an urban area), the accuracy of the position determination may decrease so that the presumed location area provided as a location of a GNSS receiver may be larger (e.g., a large-radius position circle). Additionally, some signals received in cluttered areas, for example, in urban areas, may be received after having been reflected one or more times from an object. Blocked lines of sight and signal reflections typically lead to estimated errors in position calculation of a few tens of meters, and in some instances even up to hundreds of meters. In some such cases the GNSS receiver is not able to calculate a position at all.

Several methods for determining whether a GNSS satellite has a line of sight (an "LOS satellite") or does not have a line of sight (an "NLOS satellite") to a GNSS receiver, are known, see for example, U.S. Patent No. 7,577,445 and U.S. Patent Application Publication No. 2005/0124368.

In addition to methods for determining whether or not a satellite is in line of sight to a receiver, several methods for improving the accuracy of a position calculation of a GNSS receiver are known, such as Map Matching, dead-reckoning, and integrating data from other sensors or transmissions received from non-GNSS transmitters, for example Wi-Fi access points.

The typical GNSS position accuracy of approximately 3-5 meters is insufficient for robust lane detection (identifying which lane of a multi-lane road a vehicle is traveling). Even though navigation software uses other methods to overcome this position inaccuracy, navigation software often fails to navigate correctly when lane detection is critical, such as in branched interchanges or when the lanes are close to one another, possibly leading to different destinations.

Some methods for improving GNSS accuracy in urban canyons using the identification of satellites as LOS or NLOS satellites have been suggested, see for example the Applicant's PCT Application Publication No. WO2012/085876. Groves, in "Shadow matching: A new GNSS positioning technique for urban canyons." Journal of Navigation 64.03 (2011): 417-430, discloses using a 3D city model, combined with detecting a GNSS signal attenuation, to predict an area on a street where each signal is receivable, and determined the travelled lane given an increased cross-street positioning accuracy. Van Bree, et al. in "Lane identification with real time single frequency precise point positioning: a kinematic trial." Proc. ION GNSS, Portland, Oregon (2011): 19-23, are concerned with lane detection by GNSS in highways and interchanges using externally provided GNSS error corrections to increase the positioning accuracy. Steingass, et al. in "A location and movement dependent GNSS multipath error model for pedestrian applications." Proceedings of the ION GNSS 2009, disclose how a lamp post can significantly affect direct propagation of a GNSS signal, introducing a sharp and measurable signal attenuation.

### SUMMARY OF THE INVENTION

The invention defines a method and a device for determining a position of an object using a global navigation satellite system, as defined in the appended claims.

According to an aspect of some embodiments of the invention there is also provided a method for determining the position of a GNSS receiver, comprising:
a) at a monitoring rate, monitoring at least two GNSS satellites that are located above the horizon with respect to a GNSS receiver to identify a Rapid Signal Attenuation (RSAT) event corresponding to the at least two GNSS satellites;
b) using a three dimensional representation of a presumed location area of the GNSS receiver representative of at least one obstructing object in the presumed location area, computing a shadow cast by the at least one obstructing object with respect to the signal from each of the at least two satellites;
c) measuring the duration elapsed between the GNSS receiver passing a first shadow cast by the at least one obstructing object with respect to a signal from a first of the at least two GNSS satellites and a second shadow cast by the at least one obstructing object with respect to a signal from a second of the at least two GNSS satellites;
d) computing a distance traversed by the GNSS receiver during the measured duration; and
e) comparing the computed distance to distances identified in the three dimensional representation to thereby identify a lane in which the GNSS receiver is travelling.

In some embodiments, the monitoring rate is at least as frequent as once per second. In some embodiments, the monitoring rate is at least as frequent as five times per second.

In some embodiments, the method also includes computing the presumed location area of the GNSS receiver at a presumed area computing rate. In some embodiments, the computing comprises computing the presumed location area to be within 30 meters from the actual location of the GNSS receiver. In some embodiments, the computing comprises computing the presumed location area to be within 20 meters from the actual location of the GNSS receiver. In some embodiments, the computing comprises computing the presumed location area to be within 10 meters or less from the actual location of the GNSS receiver.

In some embodiments, the method also includes computing the motion vector, including the speed and direction of motion, of the GNSS receiver at a motion vector computing rate. In some embodiments, the computing the motion vector comprises estimating a velocity of the GNSS receiver such that the magnitude of the estimated velocity is within 1 kmh of the actual velocity of the GNSS receiver, and such that the direction of the estimated velocity is within a two degree error of the direction of the actual velocity of the GNSS receiver.

In some embodiments, the method also includes obtaining ephemeris data for GNSS satellites located above the horizon with respect to the GNSS receiver, which ephemeris data may include a three dimensional position in space of each GNSS satellite. In some such embodiments, the obtaining ephemeris data comprises obtaining the ephemeris data from a database located remotely from the GNSS receiver, for example using a suitable wired or wireless communication network.

In some such embodiments, the method also includes displaying the presumed location area at a display rate, for example overlaid over a two dimensional map including the presumed location area. In some embodiments, the display rate is 1 Hz.

In some embodiments, the GNSS receiver comprises a device including a display screen, a GNSS signal receiving unit, and a software component. In some such embodiments, the GNSS receiver comprises a modified smartphone.

In some embodiments, the GNSS receiver is functionally-associated with (e.g., mounted upon or within) a vehicle, in some embodiments a terrestrial vehicle (e.g., automobile, truck,), a marine vehicle (e.g., boat or ship) or an aerial vehicle (e.g., fixed-wing aircraft, rotary-wing aircraft). In some embodiments, the GNSS receiver is functionally-associate with (e.g., mounted upon or within) an unmanned vehicle. In some such embodiments, the unmanned vehicle comprises a self-driving automobile.

In some embodiments, the three dimensional representation includes a three dimensional model of the locations and structures of utility poles and other obstructing objects preset in the presumed location area. In some embodiments, the three dimensional representation is accurate to a resolution of better than 5 cm. In some embodiments, the three dimensional representation is accurate to a resolution of better than 3 cm. In some embodiments, the three dimensional representation is obtained from a remote database. In some embodiments, the three dimensional representation is computed by software housed in the GNSS receiver.

The monitoring rate may be any suitable monitoring rate. That said, in some embodiments, the monitoring rate is not less than about 60Hz, not less than about 80 Hz, and even not less than about 100Hz.

In some embodiments, an RSAT event is identified by a drop in the intensity of a signal received from a corresponding GNSS satellite from an intensity of at least 40 dB-Hz to an intensity lower than 25 dB-Hz.

In some embodiments, the method also comprises, following 'b' the computing of a shadow cast by the at least one obstructing object, for each RSAT event, constructing a virtual three dimensional ray between a known position of a satellite corresponding to the RSAT event and an estimated location at which the RSAT event occurred. In some such embodiments, the method also includes overlaying the virtual three dimensional rays constructed for different RSAT events over one another and over the three dimensional representation, such that intersections of the virtual three dimensional rays correspond to locations of obstructing objects in the three dimensional representation.

In some embodiments, 'd' the computing of the distance traversed by the GNSS receiver comprises computing the distance based on the measured duration elapsed and on the motion vector, and particularly the velocity, of the GNSS receiver.

In some embodiments, 'e' the comparing of the computed distance to distances identified in the three dimensional representations comprises comparing the computed distance to distances between the first shadow and the second shadow in each of multiple lanes represented in the three dimensional representation. In some such embodiments, the method also includes identifying the lane in which the GNSS receiver is travelling to be the lane in which the distance between the first and second shadows in the three dimensional representation is substantially equal to the computed distance.

In some embodiments, the method also includes displaying the identified lane at a display rate. In some such embodiments, the displaying comprises displaying the identified lane, for example overlaid over a two dimensional map including the presumed location area.

In some embodiments, the method also includes reporting the identified lane to a location remote from the GNSS receiver, such as to a remote server, a remote operator of an unmanned vehicle, or another remote device. In some such embodiments, the reporting comprises communicating the identified receiver position to the remote location over a wireless communication network.

According to an aspect of some embodiments of the invention there is also provided a device for determining the position of a GNSS receiver, comprising:
a) an RSAT monitoring module, configured to monitor at least two GNSS satellites that are located above the horizon with respect to a GNSS receiver to identify a Rapid Signal Attenuation (RSAT) event corresponding to the at least two GNSS satellites, at a monitoring rate;
b) a shadow identifying module, configured to use a three dimensional representation of a presumed location area of the GNSS receiver representative of at least one obstructing object in the presumed location area to compute a shadow cast by the at least one obstructing object with respect to the signal from each of the at least two satellites; and
c) a lane identifying module, configured to:
   i. measure a duration elapsed between the GNSS receiver passing a first shadow cast by an at least one obstructing object with respect to a signal from a first of the at least two GNSS satellites and a second shadow cast by at least one obstructing object with respect to a signal from a second of the at least two GNSS satellites;
   ii. compute a distance traversed by the GNSS receiver during the measured duration; and
   iii. compare the computed distance to distances identified in the three dimensional representation to thereby identify a lane in which the GNSS receiver is travelling.

In some embodiments, the lane identifying module is configured to report the identified lane in which the GNSS receiver is travelling.

In some embodiments, the monitoring rate is at least as frequent as once per second. In some embodiments, the monitoring rate is at least as frequent as five times per second.

In some embodiments, the device also includes a navigation module configured to compute the presumed location area of the GNSS receiver at a presumed area computing rate. In some embodiments, the navigation module is configured to compute the presumed location area to be within 30 meters from the actual location of the GNSS receiver. In some embodiments, the navigation module is configured to compute the presumed location area to be within 20 meters from the actual location of the GNSS receiver. In some embodiments, the navigation module is configured to compute the presumed location area to be within 10 meters or less from the actual location of the GNSS receiver.

In some embodiments, such a navigation module is also configured to compute the motion vector, including the speed and direction of motion, of the GNSS receiver at a motion vector computing rate. In some embodiments, the navigation module is configured to estimate a velocity of the GNSS receiver such that the magnitude of the estimated velocity is within 1 kmh of the actual velocity of the GNSS receiver, and such that the direction of the estimated velocity is within a two degree error of the direction of the actual velocity of the GNSS receiver.

In some embodiments, such a navigation module is also configured to obtain ephemeris data for GNSS satellites located above the horizon with respect to the GNSS receiver, which ephemeris data may include a three dimensional position in space of each GNSS satellite. In some such embodiments, the ephemeris data is obtained from a database located remotely from the GNSS receiver, for example using a suitable wired or wireless communication network.

In some embodiments, the device also includes a display screen configured to display the presumed location area at a display rate, for example overlaid over a two dimensional map including the presumed location area. In some embodiments, the display rate is 1 Hz.

In some embodiments, the GNSS receiver comprises a device including a display screen, a GNSS signal receiving unit, and a software component. In some such embodiments, the GNSS receiver comprises a modified smartphone.

In some embodiments, the GNSS receiver is functionally associated with (e.g., mounted upon or within) a vehicle, in some embodiments a terrestrial vehicle (e.g., automobile, truck,). In some embodiments, the GNSS receiver is functionally associated with (e.g., mounted upon or within) an unmanned vehicle. In some such embodiments, the unmanned vehicle comprises at least one of a self-driving automobile.

In some embodiments, the three dimensional representation includes a three dimensional model of the locations and structures of utility poles and other obstructing objects preset in the presumed location area. In some embodiments, the three dimensional representation is accurate to a resolution of better than 5 cm. In some embodiments, the three dimensional representation is accurate to a resolution of better than 3 cm. In some embodiments, the three dimensional representation is obtained from a remote database. In some embodiments, the three dimensional representation is computed by software housed in the GNSS receiver.

The monitoring rate may be any suitable monitoring rate. That said, in some embodiments, the monitoring rate is not less than about 60Hz, not less than about 80 Hz, and even not less than about 100Hz.

In some embodiments, an RSAT event is identified by a drop in the intensity of a signal received from a corresponding GNSS satellite from an intensity of at least 40 dB-Hz to an intensity lower than 25 dB-Hz.

In some embodiments, the shadow identifying module is configured to construct, for each RSAT event, a virtual three dimensional ray between a known position of a satellite corresponding to the RSAT event and an estimated location at which the RSAT event occurred. In some such embodiments, the shadow identifying module is also configured to overlay the virtual three dimensional rays constructed for different RSAT events over one another and over the three dimensional representation, such that intersections of the virtual three dimensional rays correspond to locations of obstructing objects in the three dimensional representation.

In some embodiments, the lane identifying module is configured to compute the distance based on the measured duration and on the motion vector, and particularly the velocity, of the GNSS receiver.

In some embodiments, the lane identifying module is configured to compare the computed distance traversed by the GNSS receiver to distances between the first shadow and the second shadow in each of multiple lanes represented in the three dimensional representation. In some such embodiments, the lane identifying module is also configured to identify the lane in which the GNSS receiver is travelling to be the lane in which the distance between the first and second shadows in the three dimensional representation is substantially equal to the computed distance.

In some embodiments, the lane identifying module is configured to report the identified lane, by displaying the identified lane at a display rate. In some such embodiments, the lane identifying module is configured to display the identified lane, for example overlaid over a two dimensional map including the presumed location area.

In some embodiments, the lane identifying module is configured to report the identified lane to a location remote from the GNSS receiver, such as to a remote server, a remote operator of an unmanned vehicle, a vehicle control computer such as a control computer of a self-driving vehicle, or another remote device. In some such embodiments, the lane identifying module communicates the identified lane to the remote location over a wireless communication network.

Unless otherwise defined, all technical and scientific terms used herein have the same meaning as commonly understood by one of ordinary skill in the art to which the invention pertains. In case of conflict, the specification, including definitions, will take precedence.

As used herein, the terms "comprising", "including", "having" and grammatical variants thereof are to be taken as specifying the stated features, integers, steps or components but do not preclude the addition of one or more additional features, integers, steps, components or groups thereof. These terms encompass the terms "consisting of" and "consisting essentially of".

As used herein, the indefinite articles "a" and "an" mean "at least one" or "one or more" unless the context clearly dictates otherwise.

As used herein, when a numerical value is preceded by the term "about", the term "about" is intended to indicate +/-10%.

Embodiments of methods and/or devices of the invention may involve performing or completing selected tasks manually, automatically, or a combination thereof. Some embodiments of the invention are implemented with the use of components that comprise hardware, software, firmware or combinations thereof. In some embodiments, some components are general-purpose components such as general purpose computers or oscilloscopes. In some embodiments, some components are dedicated or custom components such as circuits, integrated circuits or software.

For example, in some embodiments, some of an embodiment is implemented as a plurality of software instructions executed by a data processor, for example which is part of a general-purpose or custom computer. In some embodiments, the data processor or computer comprises volatile memory for storing instructions and/or data and/or a non-volatile storage, for example, a magnetic hard-disk and/or removable media, for storing instructions and/or data. In some embodiments, implementation includes a network connection. In some embodiments, implementation includes a user interface, generally comprising one or more of input devices (e.g., allowing input of commands and/or parameters) and output devices (e.g., allowing reporting parameters of operation and results.

### BRIEF DESCRIPTION OF THE FIGURES

Some embodiments of the invention are described herein with reference to the accompanying figures. The description, together with the figures, makes apparent to a person having ordinary skill in the art how some embodiments of the invention may be practiced. The figures are for the purpose of illustrative discussion and no attempt is made to show structural details of an embodiment in more detail than is necessary for a fundamental understanding of the invention. For the sake of clarity, some objects depicted in the figures are not to scale.

In the Figures:
FIG. 1 is a pictorial illustration of a global navigation satellite system;
FIGS. 2A, 2B and 2C each depict an urban area, and show different areas as being illuminated by signals from a given GNSS satellite or being shadowed by a shadow cast by an obstructing object such as a building caused by the signals transmitted from the satellite;
FIG. 3 is a schematic depiction of an embodiment of a GNSS receiver according to the teachings herein, suitable for implementing embodiments of the method according to the teachings herein;
FIGS. 4A and 4B, taken together, are a flow chart of an embodiment of a method for improving global navigation satellite system accuracy according to an embodiment of the teachings herein;
FIG. 5 is a pictorial illustration of an intersection in which navigation accuracy enhancement such as lane detection is required;
FIG. 6 depicts GNSS satellite shadows within a region as used for navigation accuracy enhancement according to an embodiment of the method of the teachings herein;
FIG. 7 is a graphic depiction of signal strengths of visible satellites according to an embodiment of the teachings herein;
FIG. 8 is a graphic depiction of carrier power to noise ratio for a single satellite over time, indicating the threshold between the satellite being an LOS satellite and the satellite being an NLOS satellite according to an embodiment of the teachings herein;
FIG. 9 is a graphic depiction of signal attenuation in 10Hz from 3 different satellites according to an embodiment of the teachings herein;
FIG. 10 is a schematic depiction of an embodiment of a GNSS receiver according to the teachings herein, suitable for implementing embodiments of car lane detection using GNSS signals according to an embodiment of the teachings herein;
FIGS. 11A and 11B, taken together, are a flow chart of an embodiment of a method for accurate lane detection using GNSS satellite shadows according to an embodiment of the teachings herein; and
FIG. 12 is a schematic depiction of a computation for lane detection using GNSS devices according to an embodiment of the teachings herein.

### DESCRIPTION OF SOME EMBODIMENTS OF THE INVENTION

At any given time, a substantial number of GNSS satellites are located above the horizon relative to a given GNSS receiver on the earth's surface and therefore potentially have line of sight with the receiver.

In some instances, a GNSS receiver has an unobstructed line of sight to a GNSS satellite that is located above the horizon so that the receiver is illuminated by the signals transmitted by the satellite. Herein, in such a state the satellite is termed an LOS-satellite.

In some instances, the line of sight between a GNSS receiver and a GNSS satellite that is located above the horizon is obstructed by an obstructing object, for example by a natural object such as a mountain or by an artificial object such as a building. In such cases, the receiver is found in the shadow cast by the obstructing object caused by the signals transmitted from the satellite. Herein, in such a state the satellite is termed an NLOS-satellite. A typical GNSS receiver is able to receive signals transmitted from NLOS-satellites with which the line of sight is obstructed by reflection of the signals, but at low intensities, e.g., at least 5 dB lower than the intensity of a signal from an LOS-satellite.

In some embodiments of the teachings of PCT/IB2011/055899 published as WO2012/085876 of the Applicant, is disclosed the use of knowledge of a location at which a given satellite is found at a given time and a 3D representation of the area in which the receiver is found, to determine which portions of the area are shadowed by obstructing object and which are illuminated by signals transmitted from the satellite. By determining whether, at the given time, the satellite is an LOS (so the receiver is expected to be illuminated) or an NLOS satellite (so the receiver is expected to be in a shadow), the likely position of the receiver in the area can be more accurately determined.

Herein is disclosed a method and device for determining the position of a GNSS receiver that in some embodiments is based on detecting a transition event in which a satellite changes from being an LOS satellite to being an NLOS satellite, or from being an NLOS satellite to being an LOS satellite. Such a transition event is correlated with the receiver crossing a border between an illuminated area and a shadowed area. Since at a given time, such borders are relatively well-defined, the position of the GNSS receiver can be determined with some accuracy.

The principles, uses and implementations of the teachings herein may be better understood with reference to the accompanying description and figures. Upon perusal of the description and figures present herein, one skilled in the art is able to implement the invention without undue effort or experimentation.

Before explaining at least one embodiment of the invention in detail, it is to be understood that the invention is not limited in its applications to the details of construction and the arrangement of the components and/or methods set forth in the following description and/or illustrated in the drawings and/or the Examples. The invention can be implemented with other embodiments and can be practiced or carried out in various ways. It is also understood that the phraseology and terminology employed herein is for descriptive purpose and should not be regarded as limiting.

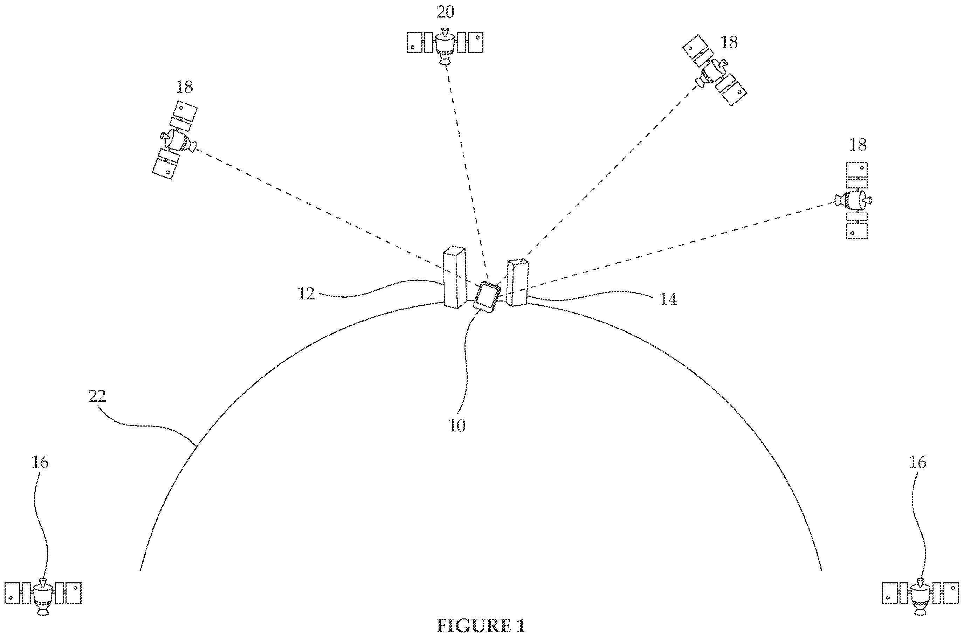

Reference is now made to Figure 1, which is a pictorial illustration of aspects of the teachings herein. As seen in Figure 1, a GNSS receiver **10** of a global navigation satellite system is located in an urban area which includes several tall buildings, indicated by reference numerals **12** and **14.** A plurality of GNSS satellites of a global navigation satellite system, indicated by reference numerals **16, 18,** and **20,** are seen orbiting the Earth **22.**

As seen in Figure 1, the satellites **16** are below the horizon with respect to receiver **10,** and therefore are invisible to receiver **10.** Receiver **10** may be able to receive signals from satellites **18** and **20,** which are above the horizon relative to receiver **10.** Thus, each satellite **18** and **20** that is above the horizon can be classified as a line of sight (LOS) satellite or a non line of sight (NLOS) satellite relative to receiver **10,** depending on whether or not the line of sight to receiver **10** is blocked.

As seen in Figure 1, satellite **20** is a LOS-satellite, having an unblocked line of sight to receiver **10.** Satellites **18** are NLOS satellites, because the respective lines of sight between each satellite **18** and receiver **10** are blocked by buildings **12** and/or **14.**

The signal strength received from an LOS satellite such as satellite **20** is typically no less than 3dB from the maximum signal strength, and is dependent on factors such as weather conditions and the location of a receiver such as receiver **10** on the face of Earth. Signals transmitted by NLOS satellites such as satellites **18** may be received indirectly by receiver **10** through reflections from various surfaces in an urban area. The signal strength received from an NLOS satellite is typically less than 5dB below the maximum signal strength.

Typically, location calculations which are based on signals received from NLOS satellites such as satellites **18,** or that take into consideration signals from NLOS satellites, are error prone. This is due to the fact that such signals are received through reflections off one or more objects surrounding the receiver **10,** such as the walls of a building **12.** As a result, the pseudoranges determined by receiver **10** using signals received from NLOS satellites **18** are different from the true pseudoranges that corresponds to the distance to those satellites **18.**

As known in the art, it is possible to determine which of satellites **18** and **20,** that are located above the horizon with respect to receiver **10,** are LOS satellites and which are NLOS satellites relative to receiver **10,** for example as described in U.S. Patent No. 7,577,445 and U.S. Patent Application Publication No. 2005/0124368.

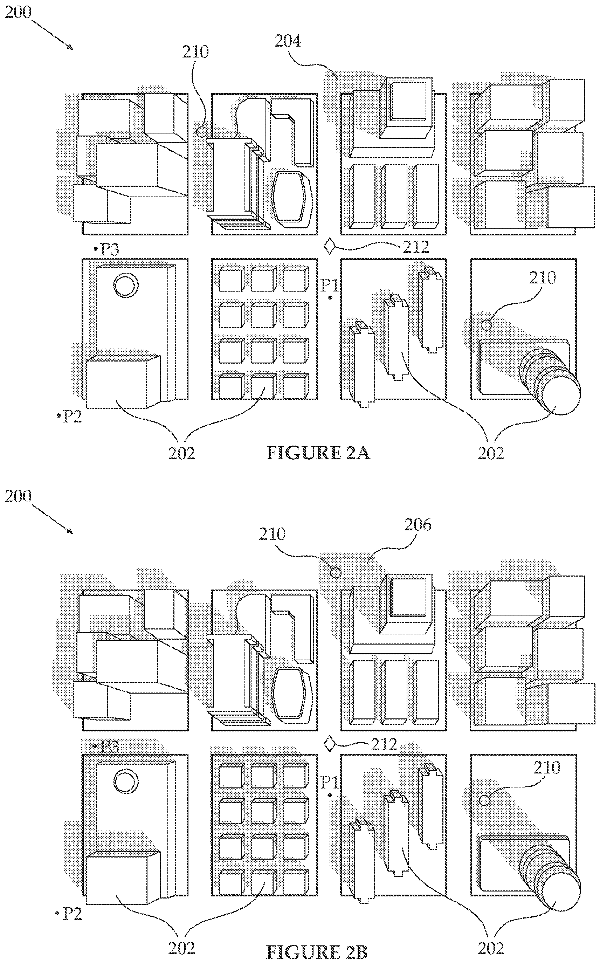

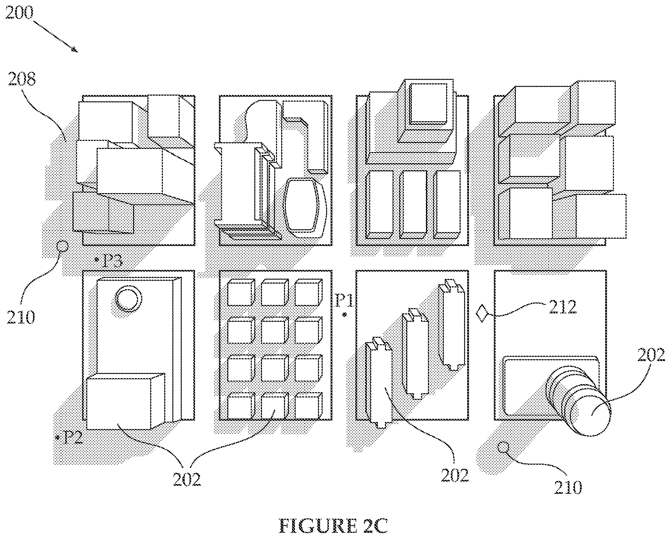

Reference is now made to Figures 2A, 2B, and 2C, which are schematic representations of a three-dimensional map of one urban area **200** overlaid with shading maps associated with three satellites according to an embodiment of the teachings herein.

As seen in Figures 2A, 2B, and 2C, the urban area **200** includes a plurality of above-ground constructions, such as buildings **202,** which are similar to buildings **12** and **14** of Figure 1. In each of Figures 2A, 2B and 2C, the three-dimensional map of urban area **200** is overlaid with a shading map associated with a different one of GNSS satellites **S1**, **S2**, and **S3**, (not shown). The shading map **204** of Figure 2A, shading map **206** of Figure 2B, and shading map **208** of Figure 2C, differ, and each shows portions of area **200** that are illuminated by transmissions from the associated satellite, and portions of area **200** that are located in a shadow cast by buildings **202** by the associated satellite. The exact size and shape of the each shaded portion in each of shading maps **204, 206,** and **208,** as well as the borders between the shaded and illuminated areas, are dependent on the azimuth position of the associated satellites **S1**, **S2**, and **S3** at any given time. The shading maps **204, 206,** and **208** may be generated using any suitable shading algorithm, such as that provided by the OpenGL and OpenGL ES-2 graphics libraries.

The shadowed regions in shading maps **204, 206,** and **208** represent regions of the urban area at which a GNSS receiver would have no line of sight to the associated satellite, for example because the line of sight is blocked by buildings **202,** while the illuminated regions represent regions at which a GNSS receiver would have a line of sight to the satellite. Stated otherwise, in each of Figures 2A, 2B, and 2C, the respective one of satellites **S1**, **S2**, and **S3** is a NLOS satellite, similar to satellites **18** of Figure 1, with respect to a GNSS receiver, such as receiver **10** of Figure 1, located in a shadowed region, such as a position **210,** but is a LOS satellite, similar to satellite **20** of Figure 1, with respect to a GNSS receiver located in an illuminated region, such as a position **212.**

As seen in Figures 2A, 2B, and 2C, each figure is marked with positions **P1**, **P2,** and **P3,** such that a corresponding satellite is LOS or NLOS with respect to a GNSS receiver located at each of the positions. Specifically:
in Figure 2A it is seen that satellite **S1** is a LOS satellite with respect to a GNSS receiver located at positions **P1**, **P2** or **P3,** since all of positions **P1**, **P2,** and **P3** are located in illuminated regions of shading map 204;
in Figure 2B it is seen that satellite **S2** is a NLOS satellite with respect to a GNSS receiver located at a position **P3** which is in a shadowed region of shading map **206,** but is a LOS satellite with respect to a GNSS receiver located at positions **P1** or **P2,** which are in an illuminated region of shading map **206;** and
in Figure 2C it is seen that satellite **S3** is a NLOS satellite with respect to a GNSS receiver located at positions **P2** or **P3** which are in shadowed regions of shading map **208,** but is a LOS satellite with respect to a GNSS receiver located at position **P1** which is in an illuminated region of shading map **208.**

By classifying each of **S1**, **S2** and **S3** as a LOS or NLOS satellite (for example according to received signal strength) by a receiver situated in an *a priori* unknown position in the vicinity of positions **P1**, **P2,** and **P3,** and by noting when a specific satellite makes a transition from being an LOS satellite to being an NLOS satellite, or from being an NLOS satellite to being an LOS satellite, with respect to a give GNSS receiver, it is possible to narrow the probable locations of the GNSS receiver in an area to those locations in the area that are along a border between an illuminated region and a shadowed region of the area relative to that specific satellite.

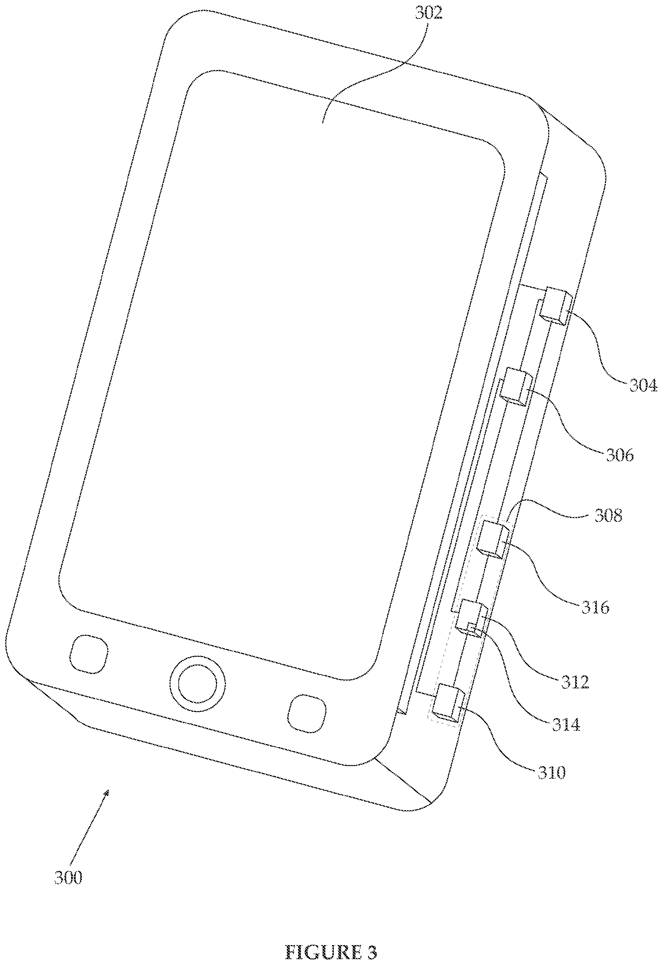

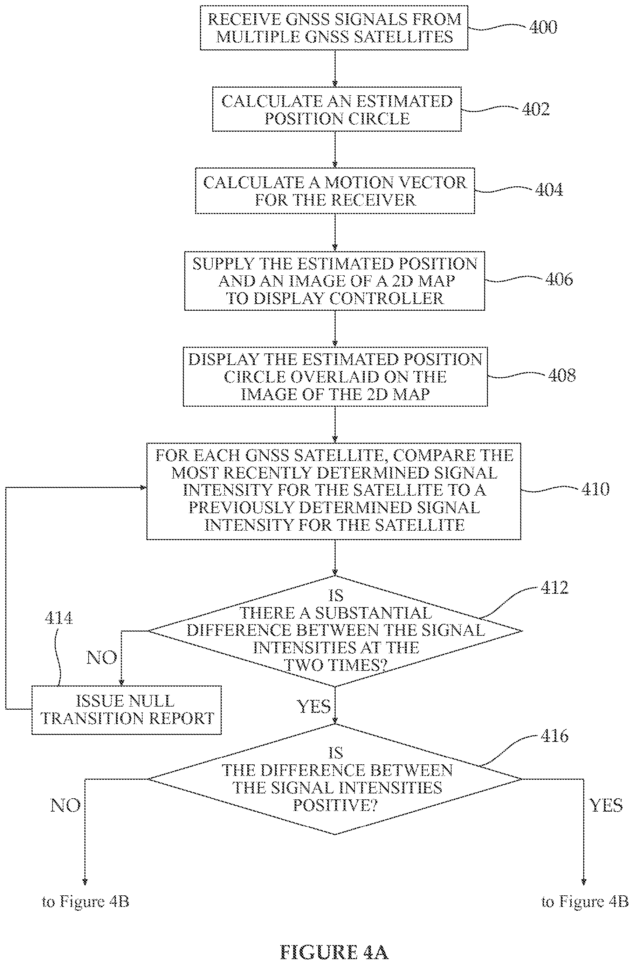

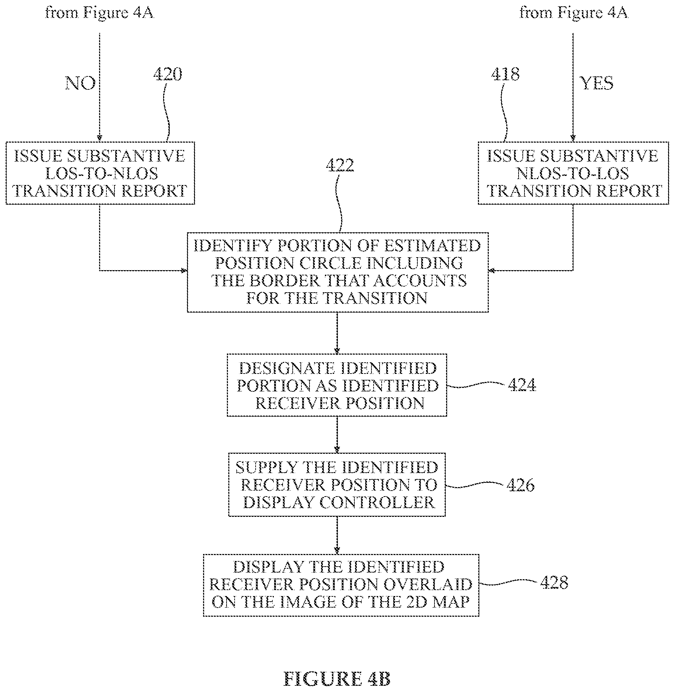

Reference is now made to Figure 3, which is a schematic depiction of an embodiment of a GNSS receiver according to the teachings herein, suitable for implementing embodiments of the method according to the teachings herein, and to Figures 4A and 4B, which, taken together, are a flow chart of an embodiment of a method for improving global navigation satellite system accuracy according to an embodiment of the teachings herein.

According to an aspect of some embodiments of the invention there is provided a method for determining the position of a GNSS receiver, comprising:
a) from a GNSS receiver, at a monitoring rate, monitoring at least one GNSS satellite that is located above the horizon with respect to the GNSS receiver to identify a transition event where the GNSS receiver changes from:
   i. LOS to NLOS - having an unobstructed line of sight to at least one specific satellite of the at least one GNSS satellite to not having an unobstructed line of sight to the at least one specific satellite; or
   ii. NLOS to LOS - not having an unobstructed line of sight to at least one specific satellite of the at least one GNSS satellite to having an unobstructed line of sight to the at least one specific satellite;
b) if a transition event is identified, identifying a portion of a presumed location area of the GNSS receiver that corresponds to a border of a shadow cast by an object that accounts for the transition event.

According to an aspect of some embodiments of the invention there is also provided a device for calculating the position of a GNSS receiver, comprising:
a) a transition monitoring module, configured to, at a monitoring rate, monitor signal characteristics received by a GNSS receiver from a GNSS satellite that is located above the horizon with respect to the GNSS receiver, and to identify a transition event where the signal characteristics indicate that the GNSS receiver changes from:
   i. LOS to NLOS - having an unobstructed line of sight to the GNSS satellite to not having an unobstructed line of sight to the GNSS satellite; or
   ii. NLOS to LOS - not having an unobstructed line of sight to the to the GNSS satellite to having an unobstructed line of sight to the GNSS satellite; and
b) a location improver, configured to, upon the identification of a transition event:
   i. obtain a presumed location area of the GNSS receiver;
   ii. determine a portion of the presumed location area that corresponds to a border of a shadow cast by an object that accounts for the identified transition event; and
   iii. report the portion of the presumed location.

Turning to Figure 3, it is seen that a GNSS receiver **300** according to an embodiment of the teachings herein includes a display screen **302,** a display controller **304** and a prior art GNSS navigation module **306,** for example, such as on the Snapdragon S4 SoC by Qualcomm of San Diego, California, USA, functionally associated therewith. In the illustrated embodiment, the GNSS receiver **300** comprises a modified smartphone, such as a Galaxy S III by Samsung of Seoul, South Korea. However, any other suitable GNSS receiver may be modified to include an implementation of the teachings herein. Specifically, in some embodiments, a GNSS receiver **300** according to the teachings herein comprises a GNSS receiver functionally associated with (e.g., mounted upon or within a vehicle), in some embodiments a terrestrial vehicle (e.g., automobile, truck,), a marine vehicle (e.g., boat or ship) or an aerial vehicle (e.g., fixed-wing aircraft, rotary-wing aircraft). In some embodiments, the GNSS receiver is functionally associated with (e.g., mounted upon or within) an unmanned vehicle. In some such embodiments, the unmanned vehicle is a self-driving automobile or an Unmanned Aerial Vehicle (UAV), also known as a drone, which is modified to implement the teachings herein, e.g., includes hardware and/or software and/or firmware according to the teachings herein as described further hereinbelow.

Navigation module **306** is configured to receive GNSS signals from a plurality of GNSS satellites located above the horizon with respect to GNSS receiver **300,** such as the American GPS satellites, as indicated by reference numeral **400** in Figure 4A, and to calculate a presumed location area of receiver **300** as an *estimated position circle* in the usual way, at reference numeral **402** of Figure 4A. In the usual way, navigation module **306** also calculates the motion vector (speed and direction of motion) of receiver **300,** at reference numeral **404** of Figure 4A.

In some embodiments, at reference numeral **406** of Figure 4A, navigation module **306** supplies the *estimated position circle* and an image of a portion of a stored 2D map that includes the *estimated position circle* to display controller **304.** Display controller **304** displays the *estimated position circle* overlaid on an image of a 2D map on display screen **302** at a display rate, typically 1 Hz, at reference numeral **408** of Figure 4A, thus reporting the *estimated position circle* to a user of the GNSS receiver.

As seen in Figure 3, GNSS receiver **300** further includes a software component **308,** such as a program written in the usual way, which is configured to implement embodiments of the teachings herein. Software component **308** includes a satellite state monitor **310** functionally associated with navigation module **306,** a location-improving module **312** including a 3D representation **314** of the area in which receiver **300** is found, such as a city, and functionally associated with navigation module **306** and with satellite state monitor **310,** and an improved-position display module **316** functionally associated with location-improving module **312** and with display controller **304.**

Satellite state monitor **310** is configured to monitor all GPS satellites that are located above the horizon with respect to receiver **300** to identify a transition event where a LOS satellite becomes a NLOS satellite or when a NLOS satellite becomes a LOS satellite. A transition event in which a LOS satellite becomes a NLOS satellite is, for example, an event in which receiver **300,** which was located in an illuminated region of an area, such as at position **212** of Figure 2A, moves to cross a border into a shadow cast by an object in the area, such as to position **210** of Figure 2A. A transition event in which a NLOS satellite becomes a LOS satellite is, for example, an event in which receiver **300,** which was located in a shadow cast by an object in the area, such as to position **210** of Figure 2A, moves to cross a border into an illuminated region of an area, such as at position **212** of Figure 2A.

In some embodiments, satellite state monitor **310** monitors the satellites for a transition at a monitoring rate. The monitoring rate may be any suitable monitoring rate. That said, in some embodiments, the monitoring rate is not less than 10Hz, not less than 20Hz, not less than 50Hz, or even not less than 100Hz.

In some embodiments, a transition event relative to a given satellite is identified by a change in signal intensity received by receiver **300** from the given satellite which change is above a predetermined threshold. In some such embodiments, the change in signal intensity is greater than a 5 dB change, greater than an 8 dB change, or even greater than a 15 dB change.

Specifically, as seen at reference numeral **410** of Figure 4A, at a suitable monitoring rate, for each GNSS satellite X that is located above the horizon with respect to receiver **300,** satellite state monitor **310** compares the most recently determined signal intensity for satellite X (the variable Iₓ(t)), which is typically the signal intensity of the signal most recently received from satellite X, to a previously determined signal intensity for satellite X (for example the variable Iₓ(t-1)), which is typically the signal intensity of a previous signal received from satellite X, to determine the difference between the detected signal intensities at the two times (for example, Delta(Iₓ) = Iₓ(t) - Iₓ(t-1)) and to determine whether a substantial difference is found between the signal intensities at the two times, at reference numeral **412** of Figure 4A.

If no substantial difference in signal intensity is found, that is to say |Delta(Iₓ)| < *threshold,* satellite state monitor **310** issues a null transition report to location-improving module **312,** for example having the format "*Satellite X crossed no bolder*", at reference numeral **414** in Figure 4A, and continues to monitor the signal intensities received from satellite X at different times.

Otherwise, if a substantial difference is signal intensity is found, the sign of the difference in signal intensity is checked to determine the transition direction, at reference numeral **416** of Figure 4A. A NLOS to LOS transition is indicated by a substantial increase in signal intensity, or by a positive value of Delta(Iₓ), while a LOS to NLOS transition is indicated by a substantial decrease in signal intensity, or by a negative value of Delta(Iₓ).

A substantial increase in signal intensity, i.e., Delta(Iₓ) > *threshold,* and, in some embodiments, Delta(Iₓ) not less than 5 dB, indicates a transition event where satellite X has changed from being a NLOS satellite relative to receiver **300,** such that receiver **300** has an obstructed line of sight to satellite X, to being a LOS satellite relative to receiver **300,** such that receiver **300** has an unobstructed line of sight to satellite X. In other words, a substantial increase in signal intensity indicates that receiver **300** has crossed a border from a region in which a shadow cast by an object obstructs the signal transmitted by satellite X, to a region illuminated by the signal transmitted by satellite X. Thus, upon identification of a substantial increase in signal intensity, satellite state monitor **310** issues a substantive transition report to location-improving module **312,** for example having the format "*Satellite X crossed border NLOS to LOS*", at reference numeral **418** of Figure 4B.

A substantial decrease in signal intensity, i.e., Delta(Iₓ) < *-threshold,* and, in some embodiments, Delta(Iₓ) not more than -5 dB, indicates a transition event where satellite X has changed from being a LOS satellite relative to receiver **300,** such that receiver **300** has an unobstructed line of sight to satellite X, to being a NLOS satellite relative to receiver **300,** such that receiver **300** has an obstructed line of sight to satellite X. In other words, a substantial decrease in signal intensity indicates that receiver **300** has crossed a border from a region illuminated by the signal transmitted by satellite X, to a region in which a shadow cast by an object obstructs the signal transmitted by satellite X. Thus, upon identification of a substantial decrease in signal intensity, satellite state monitor **310** issues a substantive transition report to location-improving module **312,** for example having the format *"Satellite X crossed border LOS to NLOS",* at reference numeral **420** of Figure 4B.

In some cases, a signal from satellite X was receiver at time t-1, but no signal was received at time t, or a signal was received from satellite X at time t, but no signal was received at time t-1. Such an event may be resolved in any suitable manner. In some embodiments, such an event may be resolved by assigning a signal intensity of 0 dB to a time at which no signal was received, and computing transitions using that signal intensity value.

As mentioned above, location-improving module **312** is functionally associated with satellite state monitor **310** and with navigation module **306,** and includes pre-stored 3D representation **314** of the area or city in which receiver **300** is located.

As seen at reference numeral **422** of Figure 4B, if a substantive transition report is issued, regardless of the type of transition identified in the substantive transition report, location-improving module **312** identifies a portion of the *estimated position circle* that corresponds to a border between a region in which a shadow cast by an object obstructs the signal transmitted by satellite X to a region illuminated by the signal transmitted by satellite X, which border was crossed during the transition event. The border is identified with reference to 3D representation **314,** and the identified portion of the estimated position circle is designated as an *identified receiver-position,* at reference numeral **424** of Figure 4B. A specific exemplary implementation of a method for identifying the portion of the *estimated position circle* and for designating the *identified receiver-position* is described hereinbelow.

In some embodiments, location-improving module **312** continuously receives the issued transition reports from satellite state monitor **310.** Location-improving module **312** additionally receives from navigation module **306** the computed *estimated position circle* and motion vector of receiver **300,** including the speed and direction of motion of receiver **300,** as well as ephemeris data, including coordinates, of the GNSS satellites that are located above the horizon with respect to receiver **300.**

For each satellite that is located above the horizon with respect to receiver **300,** location-improving module **312** stores a single substantive transition report with a timestamp when the report was stored. An older substantive transition report with associated timestamp is overwritten by a newer substantive transition report and associated timestamp relating to the same satellite.

Thus, immediately preceding a given reporting event, location-improving module **312** may have no stored substantive transition reports (no shadowed/illuminated borders crossed in the preceding second) or any number of stored substantive transition reports up to the number of satellites that are located above the horizon with respect to receiver **300.**

Immediately preceding a given reporting event, for each satellite for which there is a stored substantive transition report that is not older than a predetermined threshold duration, for example one second, location-improving module **312** calculates with reference to 3D representation **314** the regions of the *estimated position circle* that are illuminated by signals of satellite X and in which satellite X would be a LOS satellite with respect to receiver **300,** and the regions of the *estimated position circle* that are shadowed from receipt of signals of satellite X by an obstructing object, and in which satellite X would be a NLOS satellite with respect to receiver **300** and are shadowed. Some suitable methods for performing such calculation are discussed in PCT/IB2011/055899 published as WO2012/085876 and in the introduction herein. From these calculations, the locations of borders between the illuminated regions and the shaded regions of the *estimated position circle* are easily found.

For each satellite X for which there is a stored substantive transition report of format "*Satellite X crossed border NLOS to LOS"* that is not older than the threshold duration, location-improving module **312** designates as *identified receiver-position with respect to satellite X* portions of the *estimated position circle* that constitute a band along the illuminated side of the found border, the band having a width determined by the motion vector of receiver **300** over a period equal to the threshold duration.

Similarly, for each satellite X for which there is a stored substantive transition report of format *"Satellite X crossed border LOS to NLOS"* that is not older than the threshold duration, location-improving module **312** designates as *identified receiver-position with respect to satellite X* portions of the *estimated position circle* that constitute a band along the shadowed side of the found border, the band having a width determined by the motion vector of receiver **300** over a period equal to the threshold duration.

Location-improving module **312** then combines all the *identified receiver-position with respect to satellite X* portions of the *estimated position circle* for all the satellites X for which there is a stored substantive transition report that is not older than the threshold duration, and designates the combined portions of the *estimated position circle* as the *identified receiver-position* in accordance with the teachings herein.

In some embodiments, location-improving module **312** additionally accounts for the evidence supplied by those satellites for which there is no stored substantive transition report that is not older than the threshold duration. Specifically, in some such embodiments, it is assumed that since no transition event relating to a given satellite Y was detected, a LOS satellite Y remained a LOS satellite while a NLOS satellite Y remained a NLOS satellite. Accordingly, location-improving module **312** designates portions of the *estimated position circle* that do not require a crossing of a border between shadowed and illuminated regions that change of state of satellite from NLOS to LOS or LOS to NLOS as *identified-receiver position with respect to satellite Y* and excludes portions of the *estimated position circle* that require a crossing of such a border from *identified-receiver position with respect to satellite Y.* Subsequently, location-improving module **312** combines all *identified receiver-position with respect to satellite X* and *identified receiver-position with respect to satellite Y* to designate the *identified receiver-position* in accordance with the teachings herein.

The designated *identified receiver-position* is transferred to improved-position display module **316** at a reporting rate. As mentioned above, improved-position display module **316** is functionally associated with location-improving module **312** and with display controller **304.**

Improved-position display module **316** is configured to transfer the *identified receiver position* received from location-improving module **312** to display controller **304** for display to a user of GNSS receiver **300** on display screen **302.**

Specifically, during use of navigation module **306,** navigation module **306** calculates the *estimated position circle* and display controller **304** displays the *estimated position circle* overlaid on an image of a 2D map on display screen **302** at a display rate, typically 1 Hz.

When software component **308** is activated to implement the teachings herein, improved-position display module **316** provides display controller **304** with the *identified receiver position* received from location-improving module **312** at the display rate, as seen at reference numeral **426** of Figure 4B. Display controller **304** then displays *estimated position circle* overlaid on an image of a 2D map as usual, but with the *identified receiver position* marked differentially, for example in a different color or using different shading, at reference numeral **428** of Figure 4B.

In the embodiment described above, the receiver position calculated in accordance with the teachings herein and designated as the *identified receiver position,* is displayed to a user of receiver **300** on display screen **302** together with a presumed location area, such as the *estimated position circle* computed by navigation module **306.** In some embodiments, the receiver position calculated in accordance with the teachings herein is displayed on a display screen, without a presumed location area. In some embodiments, the receiver position calculated in accordance with the teachings herein is used as input for an improved subsequent calculation of a presumed location area, for example, used as input for a dead-reckoning system and/or an inertial navigation system.

In some embodiments, in which there is no human user viewing display screen **302** of receiver **300,** such as when receiver **300** is installed in a UAV or an unmanned automobile, the receiver position calculated in accordance with the teachings herein and designated as the *identified receiver-position* is not displayed on display screen **302.** In some such embodiments, the receiver position calculated in accordance with the teachings herein is communicated to a controller of the unmanned vehicle, such as via a wired communication network, wireless communication network or any suitable communication method.

In the embodiment described above, a transition event is identified by a substantial change in the intensity of a signal received from a GNSS satellite. In some embodiments, a transition event is identified by a change in direction of the Doppler shift of a signal received by the receiver from a satellite. Specifically, the Doppler shift of a signal received from a LOS satellite is towards higher frequency when the receiver moves towards the satellite and towards lower frequency when the receiver moves away from the satellite. However, often the direction of the Doppler shift of a signal received from a NLOS satellite is the opposite because the receiver receives the signal after reflection off a reflecting object. In some such embodiments, a transition event is identified exclusively by a change in direction of Doppler shift. In some such embodiments, a transition event is identified both by a change in direction of Doppler shift and by a change in intensity of a signal received from a satellite.

Some embodiments of the invention relate to methods and devices for accurately determining a position of an object, and specifically to methods and devices for determining the lane in which an object, such as a vehicle, is located. In some embodiments, the position of the object is determined using LOS and NLOS satellites as described above.

Herein is also disclosed a method and device for determining the lane in which an object (such as a vehicle, especially a terrestrial vehicle) is located that in some embodiments is based on detecting a transition event in which a satellite changes from being an LOS satellite to being an NLOS satellite, or from being an NLOS satellite to being an LOS satellite. Such a transition event is correlated with a GNSS receiver functionally associated with the object passing a shadow-forming utility pole or other obstruction, causing the GNSS receiver to lose the line of sight to the satellite for a short duration.

Some embodiments of the teachings herein provide a method for lane detection based solely on identifying areas in which the signal from a GNSS satellite is shadowed by an obstructing object, and matching the area to a shadowing object present in the vicinity of a GNSS receiver. The teachings herein further provide for rapid classification of satellites as LOS or NLOS, thereby enabling detection of narrow obstacles, for example narrower than 1 meter, at a velocity of 120 kilometers per hour (kmh). Such high speed detection enables the construction of an accurate lane detection algorithm using utility pole identification.

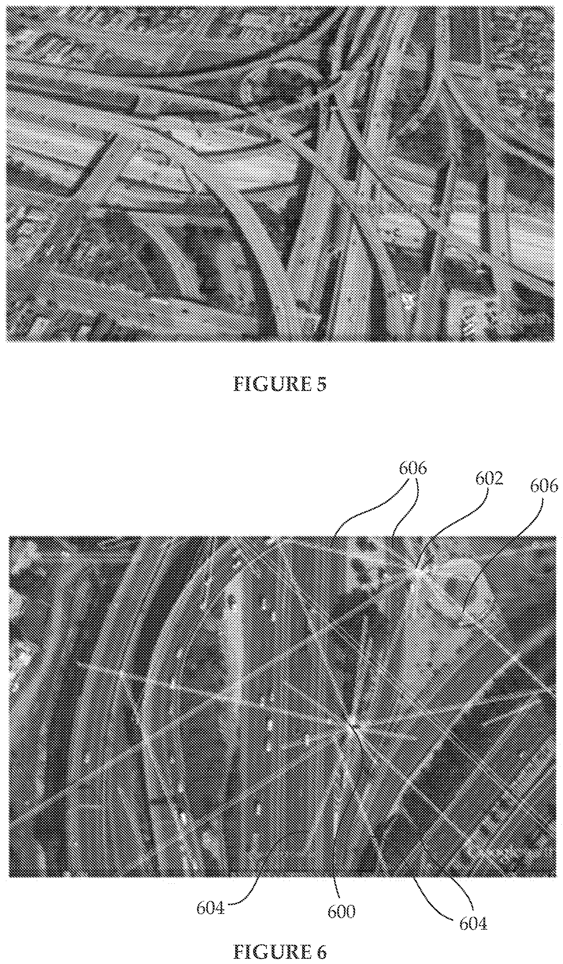

Reference is now made to Figure 5, which is a pictorial illustration of an intersection in which navigation accuracy enhancement such as lane detection is required, and to Figure 6, which depicts GNSS satellite shadows as used for navigation accuracy enhancement according to an embodiment of the method of the teachings herein.

Typical highways and interchanges, such as that shown in Figure 5, are characterized by a relatively open sky, without large obstructions such as buildings, particularly in upper lanes of interchanges, and by the presence of many light and utility poles. As discussed hereinabove with reference to Figure 5, the relatively open sky and lack of obstructions result in GNSS position estimations using standard GNSS devices and procedures being fairly accurate. In such interchanges, when a GNSS receiver is located in the shadow of a utility or light pole, a specific satellite may be an NLOS satellite with respect to the receiver, similarly to when the GNSS receiver is located in the shadow of a building, as described above with reference to Figure 1.

Figure 6 illustrates two utility poles **600** and **602,** and respective shadows **604** and **606** cast by the utility poles **600** and **602** with respect to multiple satellites, not shown. As can be seen, the shadows **604** all intersect at utility pole **600,** and shadows **606** all intersect at utility pole **602.** As will be explained in further detail hereinbelow, the fact that all the shadows cast by a given utility pole form rays coming out of an intersection point at the utility pole is significant in being able to detect the lane in which the object is moving.

The method of the teachings herein requires the ability to distinguish between LOS and NLOS satellites at the GNSS receiver, and requires the locations and dimensions of the utility poles to be known, in order to improve GNSS position accuracy and to enable robust lane detection.

The positions and heights of utility poles, as well as of other types of obstructing objects such as navigation signs and bridges located along the road or intersection where the method of the teachings herein is implemented, can be obtained in numerous ways.

In some embodiments, information regarding obstructing objects such as utility poles, navigation signs, and bridges, is obtained from 3D Geographic Information Systems (GIS) and/or from Light Detection and Ranging (LIDAR) photographs.

In some embodiments, digital three dimensional models of the obstructing objects are generated using standard graphic modeling tools, such as 3D-CAD tools including Google SketchUp and/or AutoCAD. In some embodiments, the models are then implemented in GIS software, such as Google Earth.

In some embodiments, information regarding the obstructing objects for generating such models is obtained by using GNSS satellite signals to create a three-dimensional map of the area, including the obstructing objects, for example as described in PCT/IB2011/055899 published as WO2012/085876 of the Applicant.

Once models of obstructing objects are generated or obtained, the models enable prediction of the state of each satellite as an LOS satellite or as an NLOS satellite given ephemeris data, or an estimated position, of a GNSS receiver. Alternately, the state of a satellite as an LOS satellite or as an NLOS satellite with respect to a GNSS receiver can be computed using other methods known in the art, such as those disclosed in the PCT Patent Application No. PCT/IB2013/050063 filed 3 January 2013 of the Applicant.

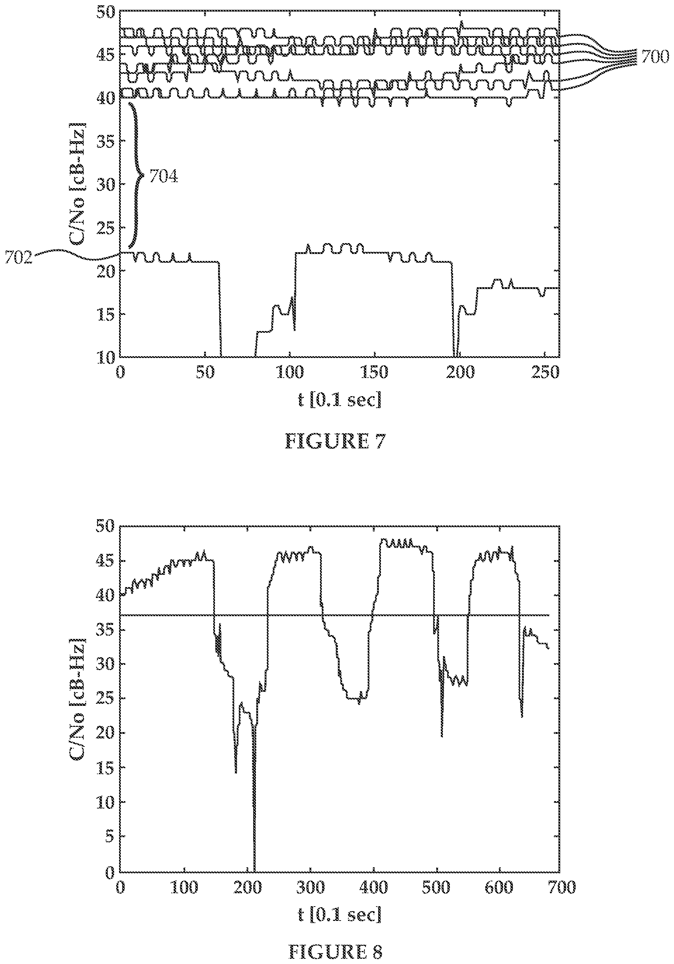

Reference is now made to Figure 7, which is a graphic depiction of signal strengths of visible satellites according to an embodiment of the teachings herein, and to Figure 8, which is a graphic depiction of carrier power to noise ratio for a single satellite over time, indicating the threshold between the satellite being an LOS satellite and the satellite being an NLOS satellite according to an embodiment of the teachings herein.

With respect to determination of the LOS or NLOS status of a give satellite with respect to a GNSS receiver based on a narrow obstructing object, such as a utility pole, the signal strength sampling rate of the GNSS receiver is crucial for obtaining reasonably accurate results. It is well known that the carrier frequency of typical GNSS receivers is within the range of 1.2-1.6 GHz. Such frequencies suffer from signal attenuation in NLOS conditions, as is well known in the art. Furthermore, though GNSS satellites send a time synchronization signal every 30 seconds, the signal strength is a continuous value and can be extrapolated at a rate of 10-100 Hz or faster. Commercial GNSS receivers and devices enable extraction of the receiver's carrier power to noise density (C/N0) measurement at a rate of 10Hz, while other modules allow a sampling rate of up to 100Hz.

Typical values of C/N0 range from 20 dB-Hz to 45 dB-Hz, where in some embodiments a signal strength of 45 dB-Hz is indicative of the satellite being an LOS satellite with respect to the receiver, and any value below 25 dB-Hz indicates the satellite being an NLOS satellite with respect to the receiver. In some embodiments, any signal strength above 40 dB-Hz is considered to be indicative of an LOS satellite with high probability. The midrange (below 40 dB-Hz and above 25 dB-Hz) is typically not helpful in LOS/NLOS classification. However, for the purpose of lane detection, all satellites must be classified as LOS satellites or as NLOS satellites.

Experimental evidence shows that, in an open-sky scenario such as typically present along a highway, and under conditions where reception is not affected by the carrying object (e.g., using a suitable antenna, such as an external antenna mounted on the exterior of an object that is vehicle), no mid-range values are obtained, and thus all satellites can be unambiguously classified as LOS satellites or NLOS satellites. As seen in Figure 7, many signal intensity values **700** measured as described hereinabove are above 40 dB-Hz, and are indicative of satellites being LOS with respect to the GNSS receiver. One of the measured signal intensity values **702** is below 25 dB-Hz, and is indicative of that satellite being NLOS with respect to the GNSS receiver. No signal intensity values are recorded in the midrange of 25-40 dB-Hz, as indicated by reference numeral **704.**

Additionally, the fluctuation in the signal-intensities between signal intensity values **700,** or while satellites are in LOS state, are very small, typically below 3 dB-Hz. Thus, in highway conditions as described above, all satellites can be classified as LOS satellites or as NLOS satellites with a high level of confidence.

Figure 8 shows recorded C/N0 values of a satellite, positioned at an elevation of 64 degrees with respect to the GNSS receiver, over time. The values were measured while walking along a shading wall using a typical GNSS receiver. As seen, LOS and NLOS states of the satellite are clearly distinguishable in the Figure. Both the shine (NLOS to LOS transition) and the decline (LOS to NLOS transition) of the satellite are very rapid.

The characteristics identified in Figure 8 are the basic pre-condition for any shadow matching algorithm - the ability to identify with high certainty whether a satellite is LOS or NLOS. The problem, however, is that the ability to detect a narrow utility pole (approximately 20cm in width) while driving at a speed of 90 kilometers/hour, or 25 meters/second, is almost impossible at a 10Hz SNR sampling rate. Thus, in some embodiments, a sampling rate of at least 60Hz, at least 80Hz, or even at least 100Hz is used for providing accurate lane detection at speeds typically used on highways.

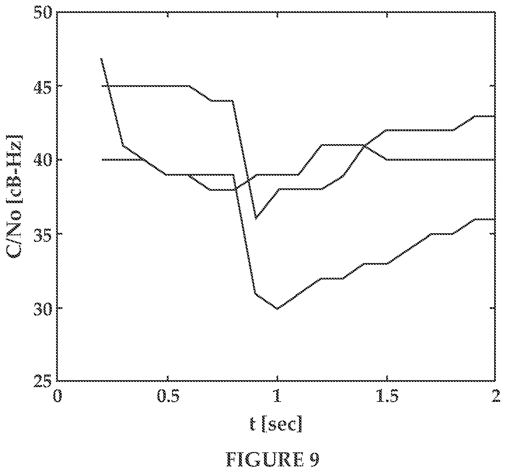

Reference is now made to Figure 9, which is a graphic depiction of signal attenuation at 10Hz from three different satellites according to an embodiment of the teachings herein. Figure 9 shows a signal-strength recording while driving at 40 kmh. Rapid Signal Attenuation (RSAT) can easily be detected within 0.1 seconds. Signal intensification is typically not as rapid as signal attenuation, but this is often caused by smoothing algorithms operative in GNSS receivers. As seen in Figure 5, all the RSAT values are at least 7-8 dB-Hz within 0.1 seconds, which is a magnitude of RSAT that can be detected in an open sky scenario such as the one shown in Figure 3. Moreover, since typically highways and intersections present an open-sky scenario, the position estimation of a GNSS receiver is rather accurate (within 10-15 meters of the actual position) and can be used to seek RSATs caused by obstacles which correlate to, or can be found in or near, the estimated position.

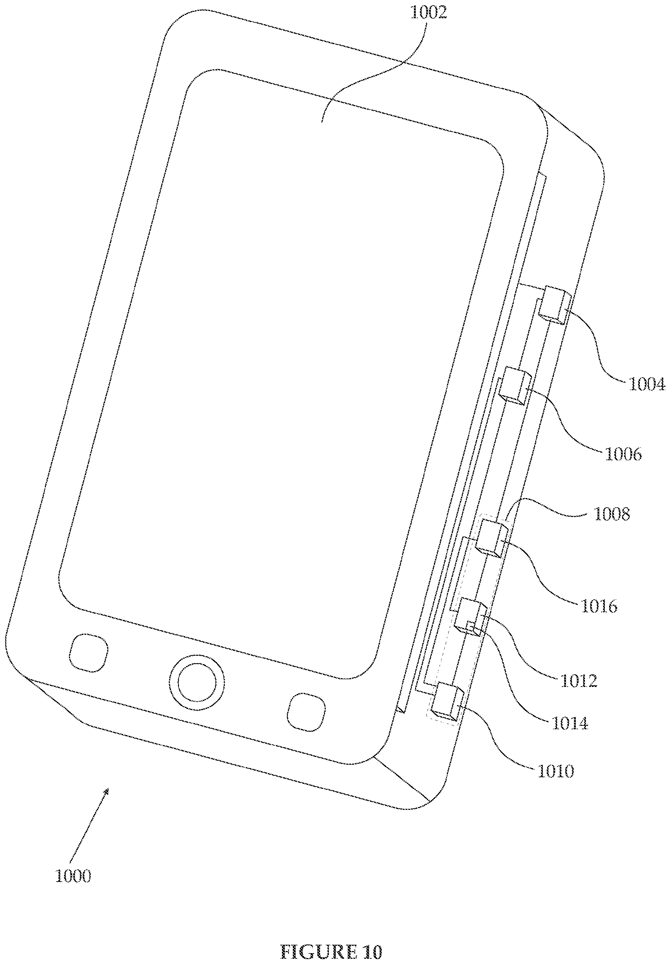

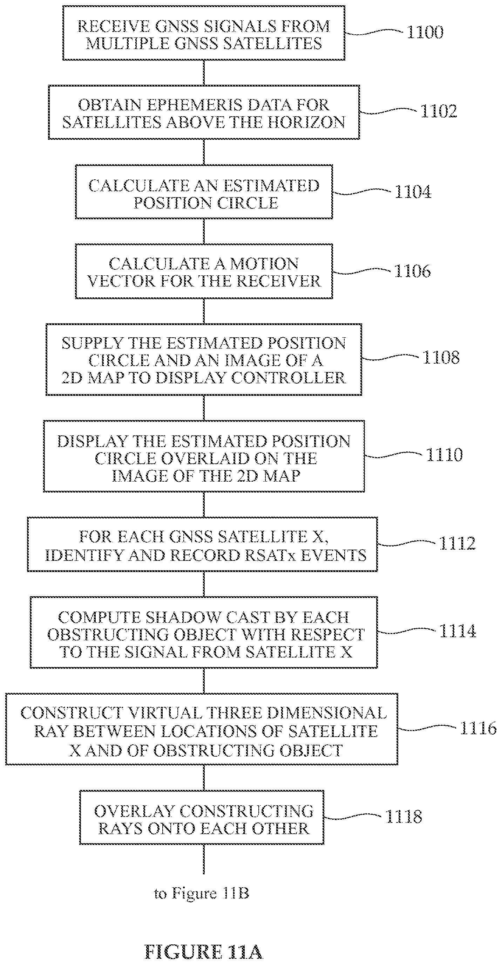

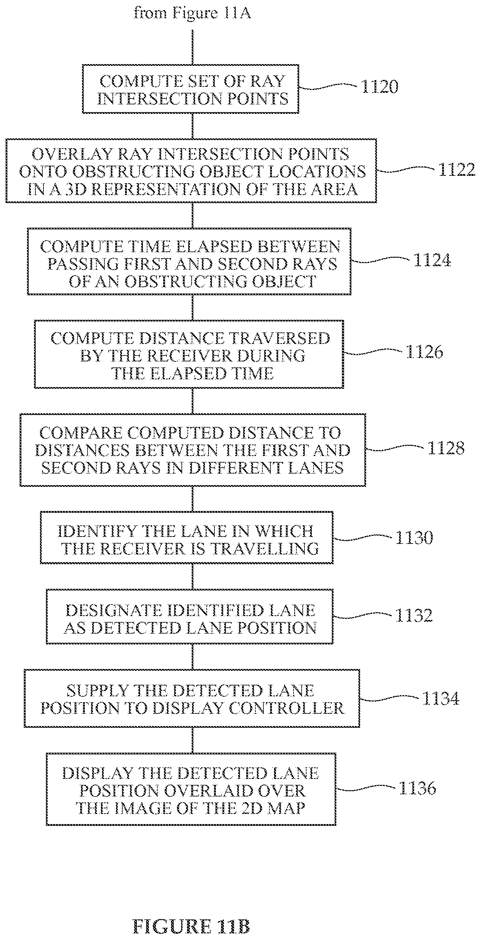

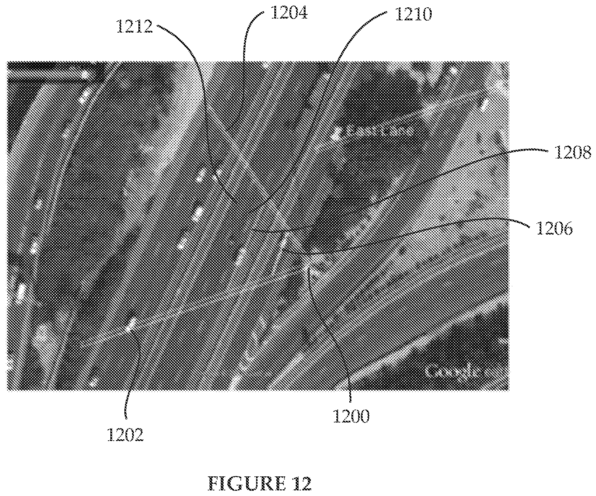

Reference is now made to Figure 10, which is a schematic depiction of an embodiment of a GNSS receiver according to the teachings herein, suitable for implementing embodiments of car lane detection using GNSS signals according to an embodiment of the teachings herein, to Figure 11, which is a flow chart of an embodiment of a method for accurate lane detection using GNSS satellite shadows according to an embodiment of the teachings herein, and to Figure 12, which is a schematic depiction of a computation for lane detection using GNSS devices according to an embodiment of the teachings herein. Thus, according to an aspect of some embodiments of the invention there is also provided a method for determining the position of a GNSS receiver, comprising:
a) at a monitoring rate, monitoring at least two GNSS satellites that are located above the horizon with respect to a GNSS receiver to identify a Rapid Signal Attenuation (RSAT) event corresponding to the at least two GNSS satellites;
b) using a three dimensional representation of a presumed location area of the GNSS receiver representative of at least one obstructing object in the presumed location area, computing a shadow cast by the at least one obstructing object with respect to the signal from each of the at least two satellites;
c) measuring the a duration elapsed between the GNSS receiver passing a first shadow cast by the at least one obstructing object with respect to a signal from a first of the at least two GNSS satellites and a second shadow cast by the at least one obstructing object with respect to a signal from a second of the at least two GNSS satellites;
d) computing a distance traversed by the GNSS receiver during the measured duration; and
e) comparing the computed distance to distances identified in the three dimensional representation to thereby identify a lane in which the GNSS receiver is travelling.

According to an aspect of some embodiments of the invention there is also provided a device for determining the position of a GNSS receiver, comprising:
a) an RSAT monitoring module, configured to monitor at least two GNSS satellites that are located above the horizon with respect to a GNSS receiver to identify a Rapid Signal Attenuation (RSAT) event corresponding to the at least two GNSS satellites, at a monitoring rate;
b) a shadow identifying module, configured to use a three dimensional representation of a presumed location area of the GNSS receiver representative of at least one obstructing object in the presumed location area to compute a shadow cast by the at least one obstructing object with respect to the signal from each of the at least two satellites; and
c) a lane identifying module, configured to:
   i. measure a duration elapsed between the GNSS receiver passing a first shadow cast by the at least one obstructing object with respect to a signal from a first of the at least two GNSS satellites and a second shadow cast by at least one obstructing object with respect to a signal from a second of the at least two GNSS satellites;
   ii. compute a distance traversed by the GNSS receiver during the measured duration; and
   iii. compare the computed distance to distances identified in the three dimensional representation to thereby identify a lane in which the GNSS receiver is travelling.

Turning to Figure 10, it is seen that a GNSS receiver **1000** according to an embodiment of the teachings herein includes a display screen **1002,** a display controller **1004** and a prior art GNSS navigation module **1006,** for example, such as on the Snapdragon S4 SoC by Qualcomm of San Diego, California, USA, functionally associated therewith. In the illustrated embodiment, the GNSS receiver **1000** comprises a modified smartphone, such as a Galaxy S III by Samsung of Seoul, South Korea. However, any other suitable GNSS receiver may be modified to include an implementation of the teachings herein. Specifically, in some embodiments, a GNSS receiver **1000** according to the teachings herein comprises a GNSS receiver mounted upon or within a vehicle, either manned or unmanned, which is modified to implement the teachings herein, e.g, includes hardware and/or software and/or firmware according to the teachings herein as described further hereinbelow.

Navigation module **1006** is configured to receive GNSS signals from a plurality of GNSS satellites located above the horizon with respect to GNSS receiver **1000,** such as the American GPS satellites, as indicated by reference numeral **1100** in Figure 11, and to obtain ephemeris data for all satellites located above the horizon with respect to receiver **1000,** at reference numeral **1102** of Figure 11. In some embodiments, the obtained ephemeris data includes a three dimensional position of each GNSS satellite. The ephemeris data can be obtained, for example, from a database located remotely from the GNSS receiver, or in any other suitable manner, as is well known in the art.

The navigation module **1006** calculates a presumed location area of receiver **1000** as an *estimated position circle* in the usual way, at reference numeral **1104** of Figure 11. Due to the open sky scenario, which is typical to highways and intersections, the GNSS receiver **1000** typically has a line of sight to four or more GNSS satellites, and can thus estimates its own position, using methods known in the art, to a predetermined accuracy. In some embodiments, the GNSS receiver **1000** estimates its own position such that the estimated position is within 30 meters of the actual position of the GNSS receiver **1000.**

Using methods known in the art and in the usual way, navigation module **1006** also calculates the motion vector (speed and direction of motion) of receiver **1000,** at reference numeral **1106** of Figure 11. Once again, due to the open sky scenario, the GNSS receiver can estimate its own velocity and direction to a predetermined accuracy. In some embodiments, the GNSS receiver **1000** estimates its own velocity such that the magnitude of the estimated velocity is within 1 kmh of the actual velocity, and such that the direction of the estimated velocity is within a two degree error of the direction of the actual velocity of receiver **1000.**

In some embodiments, at reference numeral **1108** of Figure 11, navigation module **1006** supplies the *estimated position circle* and an image of a portion of a stored 2D map that includes the *estimated position circle* to display controller **1004.** Display controller **1004** displays the *estimated position circle* overlaid on an image of a 2D map on display screen **1002** at a display rate, typically 1 Hz, at reference numeral **1110** of Figure 11, thus reporting the *estimated position circle* to a user of the GNSS receiver.

As seen in Figure 10, GNSS receiver **1000** further includes a software component **1008,** such as a program written in the usual way, which is configured to implement embodiments of the teachings herein. Software component **1008** includes a Rapid Signal ATtenuation (RSAT) monitor **1010** functionally associated with navigation module **1006.** Software component **1008** further includes a ray constructor **1012** including a 3D representation **1014** of the area in which receiver **1000** is found, such as a city, and functionally associated with navigation module **1006** and with RSAT monitor **1010.** In some embodiments, 3D representation **1014** includes an accurate three dimensional model of utility poles and other obstructing objects preset in the area in which receiver **1000** is found. As discussed above, the 3D representation **1014** can be obtained from any suitable source, including, for example, a remote database, or computation within the GNSS receiver **1000.** A lane detection module **1016** is functionally associated with RSAT monitor **1010,** ray constructor **1012** and with display controller **1104.**

RSAT monitor **1010** is configured to monitor all GNSS satellites that are located above the horizon with respect to receiver **1000** to identify and record RSAT events, which represent rapid signal attenuation for a signal received by navigation module **1006** from a specific satellite X, at reference numeral **1112** of Figure 11. Such a rapid signal attenuation event with respect to satellite X is denoted RSAT*x*, and is indicative of the receiver **1000** passing through a shadow of an obstructing object with respect to satellite X.

In some embodiments, RSAT monitor **1010** monitors the satellites for a RSAT event at a monitoring rate, for example a monitoring rate of at least 60Hz, at least 80Hz, or even at least 100Hz. In some embodiments, an RSAT event relative to a given satellite is identified by a drop in received signal intensity from an intensity of at least 40 dB-Hz to an intensity lower than 25 dB-Hz in a duration of less than 100ms, less than 10ms, or even less than 1ms. In some embodiments, the duration in which the signal intensity drops is dependent on the width of the obstacle and on the velocity of receiver **1000.,** In some embodiments, at each RSAT point, RSAT monitor computes whether or not there is a line of sight between receiver **1000** and GNSS satellite X.

Ray constructor **1012** is configured to use ephemeris data for each satellite X located above the horizon with respect to receiver **1000,** as well as the 3D representation of the obstructing objects, to compute the shadow cast by each obstructing object with respect to the signal from satellite X, at reference numeral **1114** of Figure 11. Based on the computed shadows, for each RSAT*x* event reported by RSAT monitor **1010,** ray constructor **1012** constructs a virtual three dimensional ray between the known position of satellite X and an estimated location at which the RSAT*x* event occurred, at reference numeral **1116** of Figure 11.

Ray constructor **1012** proceeds to overlay a set of rays corresponding to the tracked RSAT events for all satellites X onto each other, at reference numeral **1118** of Figure 11. As a result, a set of ray intersection points is computed at reference numeral **1120,** which ray intersection points correspond to locations of obstructing objects and are the typically the origins of the rays, similar to the ray intersections illustrated in Figure 6. At reference numeral **1122,** the ray constructor **1012** overlays the set of rays and ray intersection points onto the 3D representation **1014** such that ray intersection points correspond to locations of obstructing objects, such as utility poles, modeled in the 3D representation.

Reference is now made to Figure 12, in which it is seen that an obstructing object 1200 defines two shadow rays **1202** and **1204** with respect to two satellites **S1** and **S2** (not shown). As seen by line segments **1206, 1208, 1210,** and **1212,** the distance traversed by a vehicle after crossing shadow ray **1202** until crossing shadow ray **1204** is dependent on the depth of the angle at which the vehicle is travelling with respect to obstructing object **1200,** or, stated differently on the distance of the lane in which the vehicle is travelling from obstructing object **1200.** The farther the lane in which the vehicle is travelling is from the obstructing object **1200,** the greater the distance traversed between crossing shadow rays **1202** and **1204,** as is evident from comparison of the lengths of line segment **1206,** in which the vehicle is travelling in the lane closest to obstructing object **1200,** and line segment **1212,** in which the vehicle is travelling in the lane farthest from obstructing object **1212.** This characteristic of the distances traversed by a vehicle crossing two shadow rays such as rays **1202** and **1204** is key to lane detection according to some embodiments of the teachings herein, as described hereinbelow.

Returning to Figures 10 and 11, it is seen that ray constructor **1012** supplies the updated 3D representation **1014** including the ray intersection points to lane detection module **1016** at a data transfer rate. Lane detection module **1016** also receives the RSAT*x* records, and specifically the RSAT*x* timestamps, from RSAT monitor **1010.** At reference numeral **1224** of Figure 11, lane detection module **1016** computes the time that elapsed between the receiver **1000** passing a first ray defined by an obstructing object and a first GNSS satellite, and the receiver **1000** passing a second ray defined by the same obstructing object and a second GNSS satellite, different from the first GNSS satellite, as indicated by the timestamps of two different RSAT events relating to the same obstructing object.

Given the velocity of receiver **1000** as computed by navigation module **1006,** lane detection module **1016** computes the distance traversed by receiver **1000** while travelling between the first ray and the second ray using the formula distance equals velocity over time, as seen at reference numeral **1126** of Figure 11. Lane detection module **1016** then compares the computed distance to the distances between the first and second rays at different lanes using 3D representation **1014** received from ray constructor **1012** at reference numeral **1128** of Figure 11, and at reference numeral **1130** concludes that the receiver **1000** is located in the lane for which the distance between the first and second rays is the closest to the computed distance traversed by the receiver **1000.** The detected lane is designated as the *detected lane position* at reference numeral **1132** of Figure 11.

Lane detection module **1016** is configured to supply the *detected lane position* to display controller **1004** for display to a user of GNSS receiver **1000** on display screen **1002.** Specifically, during use of navigation module **1006,** navigation module **1006** calculates the *estimated position circle* and display controller **1004** displays the *estimated position circle* overlaid on an image of a 2D map on display screen **1002** at a display rate, typically 1 Hz.

When software component **1008** is activated to implement the teachings herein, lane detection module **1016** supplies display controller **1004** with the *detected lane position* at the display rate, as seen at reference numeral **1134** of Figure 11. Display controller **1004** then displays *estimated position circle* overlaid on an image of a 2D map as usual, but with the *detected lane position* marked differentially, for example in a different color or using different shading, at reference numeral **1136** of Figure 11.

In the embodiment described above, the lane in which the receiver is travelling calculated in accordance with the teachings herein and designated as the *detected lane position,* is displayed to a user of receiver **1000** on display screen **1002** together with a presumed location area, such as the *estimated position circle* computed by navigation module 1006. In some embodiments, the lane in which the receiver is travelling calculated in accordance with the teachings herein is displayed on a display screen, without a presumed location area. In some embodiments, lane in which the receiver is travelling calculated in accordance with the teachings herein is used as input for an improved subsequent calculation of a presumed location area, for example, used as input for a dead-reckoning system and/or an inertial navigation system.

In some embodiments, in which there is no human user viewing display screen **1002** of receiver **1000,** such as when receiver **1000** is installed in an unmanned automobile, the lane in which the receiver is travelling calculated in accordance with the teachings herein and designated as the *detected lane position* is not displayed on display screen **1002.** In some such embodiments, the *detected lane position* is communicated to a controller of the unmanned vehicle, such as via a wireless communication network or any suitable communication method.

Generally, the greater the number of RSATs used, the greater the accuracy of lane detection that can be achieved.

It is important to note that for many practical GNSS navigation implementations, lane detection is of exceptional utility on intersecting lanes or on forking lanes, and specifically on differentiating between lanes that lead to different destinations. This kind of scenario is demonstrated in Figure 12, where the lane closest to the obstructing object **1200** must be distinguishable from the other lanes as it leads to a different destination. It is appreciated that in the simplified scenario of Figure 12, a single pole and two satellites enable unique identification of the lane closest to obstructing object **1200,** and distinction thereof from other lanes. That said, given enough poles and satellites, for example ten LOS satellites and a sufficient number of mapped poles, the teachings herein allow a greater number of lanes to be uniquely identified using embodiments of the methods of the teachings herein.

It is appreciated that monitoring of RSAT events as described hereinabove can be used to improve the accuracy of position determination in any environment having many narrow obstructing objects, such as along roads, even when not attempting to detect a lane in which a receiver is travelling.

## Claims

1. A method for determining the position of a GNSS receiver (10), the method comprising:
a) at a monitoring rate, monitoring (1112) at least two GNSS satellites (16, 18, 20) that are located above a horizon with respect to the GNSS receiver (10) to identify a Rapid Signal Attenuation, RSAT, event corresponding to said at least two GNSS satellites (16, 18, 20);
b) using a three dimensional representation (1014) of a presumed location area of said GNSS receiver (10) representative of at least one obstructing object in said presumed location area, computing (1114), based on said RSAT, a shadow cast by said at least one obstructing object with respect to said signal from each of said at least two satellites (16, 18, 20);
**characterized in that** the method further comprises:
c) measuring (1124) a duration elapsed between said GNSS receiver (10) passing a first shadow cast by said at least one obstructing object with respect to a signal from a first of said at least two GNSS satellites (16, 18, 20) and a second shadow cast by said at least one obstructing object with respect to a signal from a second of said at least two GNSS satellites (16, 18, 20);
d) computing (1126) a distance traversed by said GNSS receiver (10) during said measured duration; and
e) comparing (1128) said computed distance to distances identified in said three dimensional representation (1014) thereby to identify a lane in which said GNSS receiver (10) is travelling.

2. The method of claim 1, also comprising computing (1104, 1106) at least one of said presumed location area of said GNSS receiver (10) at a presumed area computing rate and a motion vector of said GNSS receiver (10) at a motion vector computing rate.

3. The method of any one of claims 1 and 2, also comprising obtaining (1102) ephemeris data for GNSS satellites (16, 18, 20) located above said horizon with respect to said GNSS receiver (10).

4. The method of any one of claims 1-3, also comprising displaying (1110) said presumed location area at a display rate.

5. The method of any one of claims 1-4, wherein said monitoring (1112) comprises identifying said RSAT event by identifying a drop in intensity of a signal received from a corresponding one of said at least two GNSS satellites (16, 18, 20) from an intensity of at least 40 dB-Hz to an intensity lower than 25 dB-Hz.

6. The method of any one of claims 1-5, also comprising, following said computing said shadows, for each RSAT event, constructing (1116) a virtual three dimensional ray between a known position of a satellite (16, 18, 20) corresponding to said RSAT event and an estimated location at which said RSAT event occurred.

7. The method of claim 6, also comprising overlaying (1118) said virtual three dimensional rays constructed for different RSAT events over one another and over said three dimensional representation (1014), such that intersections of said virtual three dimensional rays correspond to locations of obstructing objects in said three dimensional representation (1014).

8. The method of any one of claims 1-7, wherein said computing (1126) said distance comprises computing said distance based on said measured duration and on a motion vector of said GNSS receiver (10).

9. The method of any one of claims 1-8, wherein said comparing (1128) said computed distance comprises comparing said computed distance to distances between said first shadow and said second shadow in each of multiple lanes represented in said three dimensional representation (1014).

10. The method of claim 9, also comprising identifying (1130) said lane in which said GNSS receiver (10) is travelling to be one of said multiple lanes in which said distance between said first and second shadows in said three dimensional representation (1014) is equal to said computed distance.

11. The method of any one of claims 9 and 10, also comprising displaying (1136) said identified lane at a display rate.

12. The method of any one of claims 9-11, also comprising reporting said identified lane to a location remote from said GNSS receiver (10).

13. A device (1000) for determining the position of a GNSS receiver (10), the device comprising:
a) an RSAT monitoring module (1010), configured to monitor at least two GNSS satellites (16, 18, 20) that are located above a horizon with respect to a GNSS receiver (10) to identify a Rapid Signal Attenuation, RSAT, event corresponding to said at least two GNSS satellites (16, 18, 20), at a monitoring rate;
b) a shadow identifying module (1012), configured to use a three dimensional representation (1014) of a presumed location area of said GNSS receiver (10) representative of at least one obstructing object in said presumed location area to compute, based on said RSAT, a shadow cast by said at least one obstructing object with respect to said signal from each of said at least two satellites (16, 18, 20); and
**characterized in that** the device further comprises:
c) a lane identifying module (1016), configured to:
(i) measure a duration elapsed between said GNSS receiver (10) passing a first shadow cast by said at least one obstructing object with respect to a signal from a first of said at least two GNSS satellites (16, 18, 20) and a second shadow cast by said at least one obstructing object with respect to a signal from a second of said at least two GNSS satellites (16, 18, 20);
(ii) compute a distance traversed by said GNSS receiver (10) during said measured duration; and
(iii) compare said computed distance to distances identified in said three dimensional representation (1014) thereby to identify a lane in which said GNSS receiver (10) is travelling.

14. The device (1000) of claim 13, also comprising a navigation module (1006) configured to compute at least one of said presumed location area of said GNSS receiver (10) at a presumed area computing rate and a motion vector of said GNSS receiver (10).

15. The device (1000) of any one of claims 13 and 14, wherein said navigation module (1006) is also configured to obtain ephemeris data for GNSS satellites (16, 18, 20) located above said horizon with respect to said GNSS receiver (10).

## Patentansprüche

1. Verfahren zum Ermitteln der Position eines GNSS-Empfängers (10), wobei das Verfahren umfasst:
a) Überwachen (1112), mit einer Überwachungsrate, von mindestens zwei GNSS-Satelliten (16, 18, 20), die sich in Bezug auf den GNSS-Empfänger (10) über einem Horizont befinden, um ein Rapid-Signal-Attenuation-Ereignis, RSAT-Ereignis, zu identifizieren, das den mindestens zwei GNSS-Satelliten (16, 18, 20) entspricht;
b) unter Verwendung einer dreidimensionalen Darstellung (1014) eines mutmaßlichen Standortbereichs des GNSS-Empfängers (10), die mindestens ein behinderndes Objekt im mutmaßlichen Standortbereich darstellt, Berechnen (1114) eines vom mindestens einen behindernden Objekt in Bezug auf das Signal von jedem der mindestens zwei Satelliten (16, 18, 20) geworfenen Schattens auf Basis des RSAT;
**dadurch gekennzeichnet, dass** das Verfahren ferner umfasst:
c) Messen (1124) einer Dauer, die zwischen einem Vorbeikommen des GNSS-Empfängers (10) an einem ersten Schatten, der vom mindestens einen behindernden Objekt in Bezug auf ein Signal von einem ersten der mindestens zwei GNSS-Satelliten (16, 18, 20) geworfen wird, und an einem zweiten Schatten verstreicht, der vom mindestens einen behindernden Objekt in Bezug auf ein Signal von einem zweiten der mindestens zwei GNSS-Satelliten (16, 18, 20) geworfen wird;
d) Berechnen (1126) einer Distanz, die vom GNSS-Empfänger (10) während der gemessenen Dauer durchquert wird; und
e) Vergleichen (1128) der berechneten Distanz mit in der dreidimensionalen Darstellung (1014) identifizierten Distanzen, um dadurch eine Bahn zu identifizieren, in der sich der GNSS-Empfänger (10) bewegt.

2. Verfahren nach Anspruch 1, auch umfassend ein Berechnen (1104, 1106) des mutmaßlichen Standortbereichs des GNSS-Empfängers (10) mit einer Berechnungsrate für mutmaßliche Bereiche und/oder eines Bewegungsvektors des GNSS-Empfängers (10) mit einer Berechnungsrate für Bewegungsvektoren.

3. Verfahren nach einem der Ansprüche 1 und 2, auch umfassend ein Beziehen (1102) von Ephemeridendaten für GNSS-Satelliten (16, 18, 20), die sich in Bezug auf den GNSS-Empfänger (10) über dem Horizont befinden.

4. Verfahren nach einem der Ansprüche 1-3, auch umfassend ein Anzeigen (1110) des mutmaßlichen Standortbereichs mit einer Anzeigerate.

5. Verfahren nach einem der Ansprüche 1-4, wobei das Überwachen (1112) ein Identifizieren des RSAT-Ereignisses durch Identifizieren eines Intensitätsabfalls eines von einem entsprechenden der mindestens zwei GNSS-Satelliten (16, 18, 20) von einer Intensität von mindestens 40 dB-Hz auf eine Intensität unter 25 dB-Hz umfasst.

6. Verfahren nach einem der Ansprüche 1-5, auch umfassend, nach dem Berechnen der Schatten, für jedes RSAT-Ereignis, ein Konstruieren (1116) eines virtuellen dreidimensionalen Strahls zwischen einer bekannten Position eines Satelliten (16, 18, 20), die dem RSAT-Ereignis entspricht, und einem geschätzten Standort, an dem das RSAT-Ereignis auftrat.

7. Verfahren nach Anspruch 6, auch umfassend ein Überlagern (1118) der für verschiedene RSAT-Ereignisse konstruierten virtuellen dreidimensionalen Strahlen übereinander und über die dreidimensionale Darstellung (1014), sodass Schnitte der virtuellen dreidimensionalen Strahlen Standorten von behindernden Objekten in der dreidimensionalen Darstellung (1014) entsprechen.

8. Verfahren nach einem der Ansprüche 1-7, wobei das Berechnen (1126) der Distanz ein Berechnen der Distanz auf Basis der gemessenen Dauer und eines Bewegungsvektors des GNSS-Empfängers (10) umfasst.

9. Verfahren nach einem der Ansprüche 1-8, wobei das Vergleichen (1128) der berechneten Distanz ein Vergleichen der berechneten Distanz mit Distanzen zwischen dem ersten Schatten und dem zweiten Schatten in jeder der mehreren Bahnen umfasst, die in der dreidimensionalen Darstellung (1014) dargestellt sind.

10. Verfahren nach Anspruch 9, auch umfassend ein Identifizieren (1130) der Bahn, in der sich der GNSS-Empfänger (10) bewegt, als eine der mehreren Bahnen, in der die Distanz zwischen dem ersten und dem zweiten Schatten in der dreidimensionalen Darstellung (1014) gleich der berechneten Distanz ist.

11. Verfahren nach einem der Ansprüche 9 und 10, auch umfassend ein Anzeigen (1136) der identifizierten Bahn mit einer Anzeigerate.

12. Verfahren nach einem der Ansprüche 9-11, auch umfassend ein Melden der identifizierten Bahn an einen vom GNSS-Empfänger (10) entfernten Standort.

13. Vorrichtung (1000) zum Ermitteln der Position eines GNSS-Empfängers (10), wobei die Vorrichtung umfasst:
a) ein RSAT-Überwachungsmodul (1010), das konfiguriert ist, mindestens zwei GNSS-Satelliten (16, 18, 20) zu überwachen, die sich in Bezug auf einen GNSS-Empfänger (10) über einem Horizont befinden, um ein Rapid-Signal-Attenuation-Ereignis, RSAT-Ereignis, zu identifizieren, das den mindestens zwei GNSS-Satelliten (16, 18, 20) entspricht, mit einer Überwachungsrate;
b) ein Schattenidentifizierungsmodul (1012), das konfiguriert ist, eine dreidimensionale Darstellung (1014) eines mutmaßlichen Standortbereichs des GNSS-Empfängers (10) zu verwenden, die mindestens ein behinderndes Objekt im mutmaßlichen Standortbereich darstellt, um einen vom mindestens einen behindernden Objekt in Bezug auf das Signal von jedem der mindestens zwei Satelliten (16, 18, 20) geworfenen Schatten auf Basis des RSAT zu berechnen; und
**dadurch gekennzeichnet, dass** die Vorrichtung ferner umfasst:
c) ein Bahnidentifizierungsmodul (1016), das konfiguriert ist:
(i) eine Dauer zu messen, die zwischen einem Vorbeikommen des GNSS-Empfängers (10) an einem ersten Schatten, der vom mindestens einen behindernden Objekt in Bezug auf ein Signal von einem ersten der mindestens zwei GNSS-Satelliten (16, 18, 20) geworfen wird, und an einem zweiten Schatten verstreicht, der vom mindestens einen behindernden Objekt in Bezug auf ein Signal von einem zweiten der mindestens zwei GNSS-Satelliten (16, 18, 20) geworfen wird;
(ii) eine Distanz zu berechnen, die vom GNSS-Empfänger (10) während der gemessenen Dauer durchquert wird; und
(iii) die berechnete Distanz mit in der dreidimensionalen Darstellung (1014) identifizierten Distanzen zu vergleichen, um eine Bahn zu identifizieren, in der sich der GNSS-Empfänger (10) bewegt.

14. Vorrichtung (1000) nach Anspruch 13, auch umfassend ein Navigationsmodul (1006), das konfiguriert ist, den mutmaßlichen Standortbereich des GNSS-Empfängers (10) mit einer Berechnungsrate für mutmaßliche Bereiche und/oder einen Bewegungsvektor des GNSS-Empfängers (10) zu berechnen.

15. Vorrichtung (1000) nach einem der Ansprüche 13 und 14, wobei das Navigationsmodul (1006) auch konfiguriert ist, Ephemeridendaten für GNSS-Satelliten (16, 18, 20) zu beziehen, die sich in Bezug auf den GNSS-Empfänger (10) über dem Horizont befinden.

## Revendications

1. Procédé pour déterminer la position d'un récepteur GNSS, le procédé consistant :
a) à une vitesse de surveillance, à surveiller (1112) au moins deux satellites GNSS (16, 18, 20) qui sont situés au-dessus d'un horizon par rapport au récepteur GNSS (10) pour identifier un événement d'affaiblissement rapide du signal (RSAT) correspondant auxdits deux, ou plus, satellites GNSS (16, 18, 20) ;
b) à l'aide d'une représentation tridimensionnelle (1014) d'une zone de localisation présumée dudit récepteur GNSS (10) représentative d'au moins un objet obstruant dans ladite zone de localisation présumée, à calculer (1114), en se basant sur ledit affaiblissement RSAT, une ombre projetée par ledit ou lesdits objets obstruants par rapport au dit signal provenant de chaque satellite desdits deux, ou plus, satellites (16, 18, 20) ;
**caractérisé en ce que** le procédé consiste en outre :
c) à mesurer (1124) une durée écoulée entre ledit récepteur GNSS (10) passant une première ombre projetée par ledit ou lesdits objets obstruants par rapport à un signal provenant d'un premier satellite desdits deux, ou plus, satellites GNSS (16, 18, 20) et une seconde ombre projetée par ledit ou lesdits objets obstruants par rapport à un signal provenant d'un second satellite desdits deux, ou plus, satellites GNSS (16, 18, 20) ;
d) à calculer (1126) une distance traversée par ledit récepteur GNSS (10) pendant ladite durée mesurée ; et
e) à comparer (1128) ladite distance calculée à des distances identifiées dans ladite représentation tridimensionnelle (1014), ce qui permet d'identifier un couloir dans lequel ledit récepteur GNSS (10) se déplace.

2. Procédé selon la revendication 1, consistant également à calculer (1104, 1106) ladite zone de localisation présumée dudit récepteur GNSS (10) à une vitesse de calcul de zone présumée et/ou un vecteur de déplacement dudit récepteur GNSS (10) à une vitesse de calcul de vecteur de déplacement.

3. Procédé selon l'une quelconque des revendications 1 et 2, consistant également à obtenir (1102) des données d'éphéméride pour des satellites GNSS (16, 18, 20) situés au-dessus dudit horizon par rapport au dit récepteur GNSS (10).

4. Procédé selon l'une quelconque des revendications 1 à 3, consistant également à afficher (1110) ladite zone de localisation présumée à une vitesse d'affichage.

5. Procédé selon l'une quelconque des revendications 1 à 4, dans lequel ladite surveillance (1112) consiste à identifier ledit événement d'affaiblissement RSAT en identifiant une baisse d'intensité d'un signal reçu d'un satellite correspondant desdits deux, ou plus, satellites GNSS (16, 18, 20) entre une intensité d'au moins 40 dB-Hz et une intensité inférieure à 25 dB-Hz.

6. Procédé selon l'une quelconque des revendications 1 à 5, consistant également, après ledit calcul desdites ombres, pour chaque événement d'affaiblissement RSAT, à construire (1116) un rayon tridimensionnel virtuel entre une position connue d'un satellite (16, 18, 20) correspondant au dit événement d'affaiblissement RSAT et une localisation estimée à laquelle ledit événement d'affaiblissement RSAT s'est produit.

7. Procédé selon la revendication 6, consistant également à superposer (1118) lesdits rayons tridimensionnels virtuels construits pour différents événements d'affaiblissement RSAT les uns sur les autres et sur ladite représentation tridimensionnelle (1014) de telle sorte que des intersections desdits rayons tridimensionnels virtuels correspondent à des emplacements d'objets obstruants dans ladite représentation tridimensionnelle (1014).

8. Procédé selon l'une quelconque des revendications 1 à 7, dans lequel ledit calcul (1126) de ladite distance consiste à calculer ladite distance en se basant sur ladite durée mesurée et sur un vecteur de déplacement dudit récepteur GNSS (10).

9. Procédé selon l'une quelconque des revendications 1 à 8, dans lequel ladite comparaison (1128) de ladite distance calculée consiste à comparer ladite distance calculée à des distances entre ladite première ombre et ladite seconde ombre dans chaque couloir des multiples couloirs représentés dans ladite représentation tridimensionnelle (1014).

10. Procédé selon la revendication 9, consistant également à identifier (1130) ledit couloir dans lequel ledit récepteur GNSS (10) se déplace de sorte à être l'un desdits multiples couloirs dans lesquels ladite distance entre lesdites première et seconde ombres dans ladite représentation tridimensionnelle (1014) est égale à ladite distance calculée.

11. Procédé selon l'une quelconque des revendications 9 et 10, consistant également à afficher (1136) ledit couloir identifié à une vitesse d'affichage.

12. Procédé selon l'une quelconque des revendications 9 à 11, consistant également à rapporter ledit couloir identifié vers un emplacement distant dudit récepteur GNSS (10).

13. Dispositif (1000) pour déterminer la position d'un récepteur GNSS (10), le dispositif comprenant :
a) un module de surveillance d'affaiblissement RSAT (1010), configuré pour surveiller au moins deux satellites GNSS (16, 18, 20) qui sont situés au-dessus d'un horizon par rapport à un récepteur GNSS (10) pour identifier un événement d'affaiblissement rapide du signal (RSAT) correspondant auxdits deux, ou plus, satellites GNSS (16, 18, 20) à une vitesse de surveillance ;
b) un module d'identification d'ombre (1012), configuré pour utiliser une représentation tridimensionnelle (1014) d'une zone de localisation présumée dudit récepteur GNSS (10) représentative d'au moins un objet obstruant dans ladite zone de localisation présumée pour calculer, en se basant sur ledit affaiblissement RSAT, une ombre projetée par ledit ou lesdits objets obstruants par rapport au dit signal provenant de chaque satellite desdits deux, ou plus, satellites (16, 18, 20) ; et
**caractérisé en ce que** le dispositif comprend en outre :
c) un module d'identification de couloir (1016) configuré :
i) pour mesurer une durée écoulée entre ledit récepteur GNSS (10) passant une première ombre projetée par ledit ou lesdits objets obstruants par rapport à un signal provenant d'un premier satellite desdits deux, ou plus, satellites GNSS (16, 18, 20) et une seconde ombre projetée par ledit ou lesdits objets obstruants par rapport à un signal provenant d'un second satellite desdits deux, ou plus, satellites GNSS (16, 18, 20) ;
ii) pour calculer une distance traversée par ledit récepteur GNSS (10) pendant ladite durée mesurée ; et
iii) pour comparer ladite distance calculée à des distances identifiées dans ladite représentation tridimensionnelle (1014), ce qui permet d'identifier un couloir dans lequel ledit récepteur GNSS (10) se déplace.

14. Dispositif (1000) selon la revendication 13, comprenant également un module de navigation (1006) configuré pour calculer ladite zone de localisation présumée dudit récepteur GNSS (10) à une vitesse de calcul de zone présumée et/ou un vecteur de déplacement dudit récepteur GNSS (10).

15. Dispositif (1000) selon l'une quelconque des revendications 13 et 14, dans lequel ledit module de navigation (1006) est également configuré pour obtenir des données d'éphéméride pour des satellites GNSS (16, 18, 20) situés au-dessus dudit horizon par rapport au dit récepteur GNSS (10).
